# EUROPÄISCHE PATENTANMELDUNG

(11) **EP 4 297 534 A1**
(43) Veröffentlichungstag der Anmeldung: **27.12.2023**
(21) Anmeldenummer: 22180441.2
(22) Anmeldetag: 22.06.2022
(51) Int. Cl.: H05B 47/105, B60Q 1/14

(54) **VERFAHREN UND STEUERVORRICHTUNG ZUR AUTOMATISCHEN ADAPTION EINER LICHTFUNKTION DER BELEUCHTUNGSEINRICHTUNG EINES FAHRZEUGS**

(71) Anmelder: Volkswagen Aktiengesellschaft, 38440 Wolfsburg (DE)
(72) Erfinder: Lampe, Sebastian, 49205 Hasbergen (DE); Studeny, Christian, 38170 Schöppenstedt (Eitzum) (DE); Bussius, Annika, 38446 Wolfsburg (DE); Danov, Roman, 30171 Hannover (DE); Günther, Dr. Bert, 13589 Berlin (DE); Gutjahr, Karl-Wilhelm, 10781 Berlin (DE); Petermann-Stock, Dr. Ina, 38448 Wolfsburg (DE); Roth, Dr. Joscha, 30177 Hannover (DE); Thamm, Mathias, 39646 Oebisfelde (DE); Vogler, Sebastian, 38448 Wolfsburg (DE); Weng, Michael, 10559 Berlin (DE)

(57) **Zusammenfassung**

Verfahren zur automatischen Adaption wenigstens einer Lichtfunktion einer Beleuchtungseinrichtung eines Fahrzeugs an eine Umfeldsituation des Fahrzeugs umfassend:
- Erfassen von Umfelddaten, wobei die Umfelddaten für das Umfeld des Fahrzeugs charakteristisch sind,
- Ermitteln einer Umfeldgröße auf Grundlage der Umfelddaten, welche für eine eine Lichtadaption erfordernde Umfeldsituation des Fahrzeugs charakteristisch ist,
- Abrufen einer Helligkeitsgröße basierend auf der ermittelten Umfeldgröße von einer nichtflüchtigen Speichereinrichtung, wobei die Helligkeitsgröße für die Umfeldsituation charakteristisch ist,
- Ermittlung einer Steuergröße auf Grundlage der Helligkeitsgröße zur Adaption der wenigstens einen Lichtfunktion der Beleuchtungseinrichtung des Fahrzeugs.

## Beschreibung

Die vorliegende Erfindung bezieht sich auf ein Verfahren sowie eine Steuervorrichtung zur automatischen Adaption einer Lichteinstellung einer Beleuchtungseinrichtung eines Fahrzeugs, insbesondere auf Grundlage einer eine Lichtadaption erfordernden Umfeldsituation des Fahrzeugs. Insbesondere erfolgt die Adaption einer Lichteinstellung auf Grundlage vorausgegangener manueller Adaptionen einer Lichteinstellung durch einen Nutzer eines Fahrzeugs.

Ein bekanntes Problem bei Fahrten mit einem Fahrzeug sind sich ändernde Lichtverhältnisse, bei denen der Fahrer eine manuelle Adaption einer Lichtfunktion der Beleuchtungseinstellung des Fahrzeugs vornehmen muss.

Moderne Fahrzeuge weisen ein adaptives Lichtsystem auf, welches beispielsweise eine automatische Einstellung (vordefinierte Lichteinstellungen) des Lichts in Abhängigkeit vom Umgebungslicht (Automatische Fahrlichtsteuerung), der Geschwindigkeit und/oder einer GPS Position (Stadtlicht, Landstraßenlicht, Autobahnlicht), dem Wetter (Schlechtwetterlicht) oder einem entgegenkommenden oder vorausfahrenden anderen Verkehrsteilnehmer vornehmen kann. Die für die Automatische Fahrlichtsteuerung erforderlichen Daten werden typischerweise von einem Regen-/Lichtsensor erfasst.

Das Fahrzeug nähert sich beispielsweise einer Tunneleinfahrt oder einem anderen Bereich, in dem Sonnenlicht stark abgeschattet wird. Beim Einfahren in diesen dunklen Bereich, muss sich das menschliche Auge erst an die veränderten Helligkeitsbedingungen gewöhnen, was bei einem Wechsel von einer sehr hellen in eine sehr dunkle Umgebung vergleichsweise lange dauern kann und für diesen Zeitraum zu einer schlechten Sicht führt.

Hier kommt dazu, dass das automatische Einschalten des Abblend- und Schlusslichts an den Fahrzeugen an den Regen-/Lichtsensor gekoppelt ist und hysteresebedingt ebenfalls zeitverzögert stattfindet.

Aus der DE 10 2006 003 646 A1 ist ein Verfahren zur automatischen Adaption des von einer Beleuchtungseinrichtung in einem Fahrzeug ausgesandten Lichts bekannt. Hierfür wird eine aktuelle Fahreraktivität ermittelt und mindestens eine weitere Information erfasst, wobei es sich um vorangegangene Fahreraktivitäten, meteorologische Daten (Witterung, Temperatur), Helligkeit, weitere Fahrzeuge, Verkehrsumgebung etc. handeln kann. Abhängig von der Auswertung der aktuellen Fahreraktivität und der Auswertung der mindestens einen weiteren Information erfolgt eine automatische Adaption der Beleuchtungseinrichtung.

Der Nachteil des genannten Verfahrens liegt darin, dass ein aktuelles Fahrerverhalten die Grundlage der Adaption der Beleuchtungsverhältnisse bildet und dessen Auswertung zusammen mit der Auswertung weiterer Daten erfolgen muss. Durch eine Adaption der Lichteinstellung auf Grundlage eines aktuellen Fahrerverhaltens ist aber keine vorrausschauende Anpassung der Lichtfunktionen möglich oder es kann nicht spontan auf eine womöglich bisher unbekannte (insbesondere in Bezug auf eine vorangegangene Fahreraktivität) Situation adäquat und schnell reagiert werden.

Der vorliegenden Erfindung liegt daher die Aufgabe zugrunde, die aus dem Stand der Technik bekannten Nachteile zu überwinden und ein Verfahren sowie eine Steuervorrichtung zur Adaption wenigstens einer Lichtfunktion der Beleuchtungseinrichtung eines Fahrzeugs an eine Umfeldsituation bereitzustellen.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Bei einem erfindungsgemäßen Verfahren zur, insbesondere automatischen Adaption, wenigstens einer Lichtfunktion einer Beleuchtungseinrichtung eines Fahrzeugs an eine Umfeldsituation des Fahrzeugs werden Umfelddaten erfasst, wobei die Umfelddaten für ein bzw. das Umfeld des Fahrzeugs und/oder die Umfeldsituation des Fahrzeugs charakteristisch sind.

In einem weiteren Schritt wird eine Umfeldgröße auf Grundlage der Umfelddaten ermittelt, welche für eine eine Lichtadaption erfordernde Umfeldsituation des Fahrzeugs charakteristisch ist. In einem weiteren Schritt wird eine Helligkeitsgröße basierend auf der ermittelten Umfeldgröße von einer nichtflüchtigen Speichereinrichtung abgerufen, wobei die Helligkeitsgröße für die Umfeldsituation charakteristisch ist. In einem weiteren Schritt wird eine Steuergröße auf Grundlage der Helligkeitsgröße zur Adaption der wenigstens einen Lichtfunktion der Beleuchtungseinrichtung des Fahrzeugs ermittelt.

Das vorgeschlagene Verfahren bietet den Vorteil, dass anhand der erfassten Umfelddaten und deren Auswertung durch das Abrufen einer zuvor bereitgestellten Helligkeitsgröße, welche beispielsweise zuvor eingelernt wurde, eine aktuell vorliegende Situation sofort erkannt werden kann und direkt eine an die erkannte Situation angepasste Einstellung einer Lichtfunktion der Beleuchtungseinrichtung vorgenommen werden kann.

Bei einem vorteilhaften Verfahren werden die Umfelddaten durch wenigstens eine Sensoreinrichtung erfasst, wobei die wenigstens eine Sensoreinrichtung aus einer Gruppe von Sensoreinrichtungen umfassend wenigstens einen Lichtsensor, wenigstens einen Regensensor, wenigstens einen Abstandsensor, wenigstens einen Fahrzeugpositionssensor, insbesondere einen GPS-Sensor, wenigstens eine Bildaufnahmeeinrichtung, insbesondere eine Kamera, besonders bevorzugt eine Rückfahrkamera, besonders bevorzugt eine Frontkamera, eine Stereokamera, einen thermischen Sensor, einen Ultraschallsensor, einen Lidar-Sensor, einen Radar-Sensor und dergleichen sowie Kombinationen hiervon ausgewählt ist.

Zusätzlich oder alternativ können die Umfelddaten mit einer (fahrzeuginternen) Kommunikationseinrichtung erfasst werden, mit welcher die Umfelddaten empfangen werden. So können die Umfelddaten insbesondere drahtlos von einem weiteren Verkehrsteilnehmer und/oder einer Infrastruktureinrichtung an die Kommunikationseinrichtung des Fahrzeugs übermittelt werden.

Das vorgeschlagene Verfahren bietet den Vorteil, dass wenigstens eine bereits in das Fahrzeug integrierte Sensoreinrichtung verwendet werden kann, welche im gegenwärtigen Stand der Technik üblich ist und bevorzugt werden eine Vielzahl solcher Sensoreinrichtungen verwendet. Insbesondere ist es dadurch möglich, keine zusätzlichen Bauteile in das Fahrzeug integrieren zu müssen.

Bei einem bevorzugten Verfahren können die Umfelddaten durch eine Sensoreinrichtung und besonders bevorzugt durch mehrere Sensoreinrichtungen insbesondere simultan, insbesondere zeitgleich und insbesondere zeitversetzt erfasst werden.

Bevorzugt sind die erfassten Umfelddaten für das Umfeld des Fahrzeugs und/oder die Umfeldsituation charakteristisch. Dabei sind bevorzugt die Umfelddaten für einen in Fahrtrichtung des Fahrzeugs befindlichen Bereich des Umfelds des Fahrzeugs charakteristisch. Bevorzugt sind die Umfelddaten für einen Bereich des Umfelds des Fahrzeugs charakteristisch, welcher relevant ist für und/oder welcher Auswirkungen hat auf (ausreichende) Helligkeitsverhältnisse bzw. die Lichtverhältnisse und/oder Beleuchtungsverhältnisse und/oder Witterungsverhältnisse und/oder Verkehrsverhältnisse zum Betrieb des Fahrzeugs und/oder auf die Verkehrssicherheit. Die Verkehrssicherheit kann sich dabei beziehen auf das Fahrzeug (bzw. dessen Insassen und/oder Nutzer) und/oder (wenigstens) einen von dem Fahrzeug verschiedenen Verkehrsteilnehmer. Bei letzterem kann es sich beispielsweise um ein entgegenkommendes Fahrzeug handeln, dessen Fahrer möglicherweise von dem Fernlicht des Fahrzeugs geblendet werden kann.

In Abhängigkeit der verwendeten Sensoreinrichtungen werden bevorzugt charakteristische Daten bezüglich der Lichtverhältnisse, insbesondere durch die Verwendung eines Lichtsensors, der Sichtverhältnisse, insbesondere durch die Verwendung eines Regensensors, die Anwesenheit von anderen Verkehrsteilnehmern, insbesondere der Abstand zu anderen Verkehrsteilnehmern und Einrichtungen der Infrastruktur, insbesondere durch die Verwendung eines Abstandssensors, Ultraschallsensors, Lidar-Sensors und/oder Radar-Sensors und/oder der Position des Fahrzeugs, insbesondere durch die Verwendung eines GPS-Sensors, erhalten.

Bevorzugt handelt es sich bei den Umfelddaten um ortsaufgelöste (Sensor-)Daten. Bevorzugt wird als Sensoreinrichtung eine Kamera, insbesondere eine Frontkamera oder Rückfahrkamera oder insbesondere eine Stereokamera verwendet, wobei die erfassten Umfelddaten hierbei einem ortsaufgelösten Bild entsprechen. Dabei handelt es sich bevorzugt und ein zweidimensionales ortsaufgelöstes Bild und besonders bevorzugt um ein dreidimensionales ortsaufgelöstes Bild.

Bevorzugt wird zur Erfassung, insbesondere zum Empfang, der Umfelddaten eine Kommunikationseinrichtung verwendet, welche dazu geeignet und bestimmt ist, insbesondere drahtlose (Funk-)Signale anderer Verkehrsteilnehmer und/oder des Verkehrsumfelds zu empfangen. Bevorzugt erfolgt die Kommunikation zwischen dem Fahrzeug und einem hiervon verschiedenen Fahrzeug via einer Car2Car-Kommunikation und/oder via einer X2Car-Kommunikation und/oder via einer Car2X-Kommunikation.

Bevorzugt wird als Sensoreinrichtung ein Positionssensor, insbesondere ein GPS-Sensor verwendet, wobei die erfassten Umfelddaten, insbesondere die Positionsdaten des Fahrzeugs wie etwa GPS-Koordinaten, charakteristisch für den Standort des Fahrzeug sind. Bevorzugt sind die erfassten Umfelddaten, insbesondere die GPS-Koordinaten, charakteristisch für den Standort des Fahrzeugs relativ zu einer Umfeldsituation, welche bevorzugt eine Lichtadaption wenigstens einer Lichtfunktion der Beleuchtungseinrichtung des Fahrzeugs erforderlich macht.

Bevorzugt wird in einem weiteren Schritt des erfindungsgemäßen Verfahrens ausgehend von den erfassten Umfelddaten eine Umfeldgröße ermittelt, welche für eine eine Lichtadaption erfordernde Umfeldsituation charakteristisch ist.

Unter einer Umfeldsituation ist insbesondere eine Situation (in dem Umfeld des Fahrzeugs) zu verstehen, die eine Lichtadaption der wenigstens einen Lichtfunktion erforderlich macht. Bevorzugt ist die Lichtadaption verursacht durch wenigstens ein Objekt, welches einen Einfluss auf Sichtverhältnisse und/oder ein Helligkeitsverhältnis und/oder die Lichtverhältnisse, auf den durch das Fahrzeug ausgeleuchteten bzw. auszuleuchtenden Bereich hat und/oder von einer Lichtfunktion der Beleuchtungseinrichtung des Fahrzeugs beeinflusst wird. Bei der Umfeldsituation und/oder dem Objekt handelt es sich mit anderen Worten um wenigstens einen Einflussfaktor, welcher die Adaption der Lichtfunktion zumindest teilweise (mit-)begründet und bevorzugt im Wesentlichen und besonders bevorzugt im Wesentlichen alleine begründet.

Beispielsweise kann in dem Umfeld des Fahrzeugs, insbesondere in Fahrtrichtung vor dem Fahrzeug befindlich, ein Tunnel, ein Hochhaus, Berge, eine hohe Erhebung in Bezug auf die Fahrbahn oder eine (tiefe) Schlucht angeordnet sein, welche(r) beispielsweise die Verringerung von Umgebungslicht bereits bei der Annäherung des Fahrzeugs an diese Objekte bewirken. Diese Verringerung des Umgebungslichts im Fahrzeugumfeld kann beispielsweise die Adaption wenigstens einer Lichtfunktion der Beleuchtungseinrichtung des Fahrzeugs erfordern. In diesem konkreten Beispiel kann daher die Umfeldsituation des Fahrzeugs den (herannahenden in Bezug auf die Fahrbewegung des Fahrzeugs) Tunnel und insbesondere die relative Anordnung des Tunnels in Bezug auf das Fahrzeug umfassen.

Bei einem eine Adaption der Lichtfunktion verursachenden bzw. beeinflussenden Objekt kann es sich beispielsweise um Objekte (Tunnel, Gebäude, Hochhäuser, Berge) handeln, welche eine (insbesondere potentielle) Abschattungswirkung aufweisen und/oder die Umgebungshelligkeit und/oder Fahrbahnhelligkeit beeinflussen.

Die erfassten Umfelddaten können dabei unmittelbar für die Umfeldsituation und/oder das die Adaption der Lichtfunktion beeinflussende und/oder verursachende Objekt (als solches) charakteristisch sein. Beispielsweise kann es sich bei den Umfelddaten um Bilddaten des herannahenden Tunnel handeln, die die (Front-)Kamera des Fahrzeugs aufgenommen hat.

Denkbar ist aber auch, dass es sich bei den Umfelddaten um Daten handeln, aus denen eine Umfeldsituation und/oder ein die Adaption der Lichtfunktion beeinflussendes und/oder verursachendes Objekt ableitbar ist, ohne diese selbst (unmittelbar) darzustellen. So könnte es sich beispielsweise bei den Umfelddaten um Daten handeln, welche etwa ein Verkehrsschild (aus dem Umfeld des Fahrzeugs) darstellen. Aus der Bedeutung des Verkehrsschilds (wie etwa ein Gefahrzeichen, beispielsweise für ein unzureichendes Lichtraumprofil, und/oder ein Richtzeichen, beispielsweise zur Ankündigung eines Tunnels, und/oder ein Ortsschild, aus welchem beispielsweise ein Fernlichtverbot ableitbar ist) kann beispielsweise die herannahende Verkehrssituation und insbesondere eine Entfernung zu dieser relativ zum Verkehrsschild und/oder zum Fahrzeug abgeleitet werden (ohne diese selbst bereits erfasst zu haben).

Bei der Umfeldsituation kann es sich insbesondere auch um eine Verkehrssituation (wie etwa die Anwesenheit vorausfahrender und/oder entgegenkommender Fahrzeuge) und/oder eine Fahrbahnsituation (etwa einer innerorts befindlichen Fahrbahn) handeln, welche eine Adaption der Lichtfunktion erfordert. Beispielsweise kann bei Vorliegen einer solchen Verkehrssituation und/oder einer Fahrbahnsituation eine Vorschrift und/oder ein Gebot und/oder Verbot etwa der Straßenverkehrs-Ordnung in Bezug auf die Lichtfunktion eine Adaption dieser Lichtfunktion erfordern. So kann etwa bei Gegenverkehr und/oder bei vorausfahrenden Fahrzeugen die Verwendung eines Fernlichts verboten und/oder ein Abblenden vorgeschrieben sein. Weiterhin kann innerorts und/oder bei durchgehender Beleuchtung einer Straße die Verwendung eines Fernlichts verboten sein.

Bei der die Lichtadaption erfordernde Umfeldsituation kann es sich um eine vorübergehende oder eine dauerhafte und/oder eine witterungsbedingte und/oder eine verkehrsbedingte Situation handeln.

Bevorzugt erfolgt die Ermittlung einer Umfeldgröße unter Verwendung eines (computerimplementierten) Verfahrens zur Erkennung und/oder Klassifizierung von Umfeldsituationen und/oder Objekten anhand der Auswertung und/oder Verarbeitung der Umfelddaten, insbesondere anhand der Auswertung von ortsaufgelösten Bildern.

Bevorzugt werden die Umfelddaten dahingehend ausgewertet, dass ermittelt wird, ob diese charakteristisch sind für wenigstens ein Objekt und/oder eine Umfeldsituation, welche(s) die Adaption der Lichtfunktion erforderlich macht (wie beispielsweise wegen einer etwa zu erwartenden Abschattung durch einen Tunnel). Insbesondere wird hier beurteilt, ob ein erkanntes Objekt und/oder eine erkannte Verkehrssituation dazu geeignet ist, eine eine Adaption der Lichtfunktion auslösende Situation herbeizuführen und/oder zu beeinflussen. Denkbar ist auch, dass mehrere Objekte und insbesondere deren relative Anordnung zueinander erkannt werden und aus diesen eine Verkehrssituation zusammengesetzt wird.

Bevorzugt wird bei der Beurteilung, ob eine Verkehrssituation und/oder ein Objekt eine Adaption der Lichtfunktion verursacht und/oder erfordert und/oder eine solche zu erwarten ist, wenigstens eine (geometrische) Ausdehnung des Objekts und/oder eines Objekts aus der Verkehrssituation, wie beispielsweise eine Höhe und/oder eine Breite eines Objekts, berücksichtigt. So kann etwa aus der Höhe des Objekts darauf geschlossen werden, ob eine Abschattungswirkung in Bezug auf das Fahrzeug und/oder einen relevanten Fahrbahnbereich in Bezug auf das Fahrzeug zu erwarten ist und/oder eintritt.

Bevorzugt erfolgt die Erkennung und/oder Klassifizierung von Objekten unter Verwendung einer Prozessoreinrichtung und/oder Datenverarbeitungseinrichtung, mittels Anwendung wenigstens eines (computerimplementierten) Computer-Vision-Verfahrens, in welchem (computer-implementierte) Wahrnehmungs- und/oder Erfassungsaufgaben ausgeführt werden, beispielsweise (computer-implementierte) 2D - und/oder 3D- Objekterkennungsverfahren und/oder (computer-implementierte) Verfahren zur semantischen Segmentierung und/oder (computer-implementierte) Objektklassifizierung ("Image classification") und/oder (computer-implementierte) Objektlokalisierung und/oder (computer-implementierte) Kantenerkennung.

Dabei wird bei der Objektklassifizierung das in den Umfelddaten, insbesondere in den ortsaufgelösten Bildern erfasste und/oder dargestellte Objekt einer (vorher eingelernten und/oder vorgegebenen) Klasse zugeordnet. Bei einer Objektlokalisierung wird insbesondere zusätzlich zu einer Objektklassifizierung ein Ort eines in den Umfelddaten, insbesondere in den ortsaufgelösten Bildern erfassten und/oder dargestellten Objekts (insbesondere in Bezug auf die Umfelddaten) bestimmt bzw. ermittelt, welcher insbesondere durch eine sogenannte Bounding Box markiert und/oder hervorgehoben wird. Bei der semantischen Segmentierung wird insbesondere jedem Pixel der Umfelddaten eine Klasse (zur Klassifizierung eines Objekts) (insbesondere aus einer insbesondere vorgegebenen Vielzahl von Klassen) zugeordnet (Klassen-Annotation).

Bei den Klassen kann es sich beispielsweise (unter anderem) um andere Fahrzeuge, Verkehrszeichen, Schilder und/oder Ortsschilder, Fahrbahnbegrenzungen, Infrastruktureinrichtungen, Tunnel, Gebäude, Hochhäuser, Berge, und dergleichen handeln und/oder derartige Objekte umfassen. Bevorzugt handelt es sich bei den Klassen generell um Objekte, welche eine Abschattungswirkung aufweisen und/oder die Umgebungshelligkeit und/oder Fahrbahnhelligkeit beeinflussen. KI-basierte neuronale Netze zur Erkennung und Klassifizierung von Objekten entsprechend der vorgenannten Klassen, können beispielsweise in Multifunktionskamerasystemen im Bereich Automotive bzw. in Fahrzeugen eingesetzt werden.

Bevorzugt basiert die Ermittlung der Umfeldgröße aus den von der Sensoreinrichtung erzeugten (Roh-)Umfelddaten oder hieraus abgeleiteter Daten (und insbesondere basiert die Ausführung von Computer-Vision-Verfahren bzw. Wahrnehmungsverfahren) auf (computer-implementierten) Verfahren des maschinellen Lernens, bevorzugt auf wenigstens einem (künstlichen) neuronalen Netzwerk basierenden Verfahren des maschinellen Lernens. Ein solches neuronales Netzwerk kann beispielsweise als tiefes neuronales Netzwerk (Deep Neural Network, DNN) und/oder ein sogenanntes Convolutional Neural Network (CNN) (dt. Faltungsnetzwerk) und/oder ein rekurrentes Neuronales Netzwerk (RNN, engl. Recurrent Neural Network) ausgestaltet sein.

In einem bevorzugten Verfahren erfolgt ein Vergleich mit zuvor erkannten Objekten bzw. Objektklassen, welche im Rahmen eines vorangegangenen Verfahrens des maschinellen Lernens erfasst wurden, ob es sich bei der ermittelten Umfeldgröße bzw. der zugehörigen Umfeldsituation um eine bekannte, unbekannte oder vergleichbare Umfeldgröße bzw. Umfeldsituation handelt. Bei einer vergleichbaren Umfeldgröße bzw. Umfeldsituation kann es sich beispielsweise um eine bekannte Umfeldgröße bzw. Umfeldsituation handeln, aber bei einer anderen Tageszeit.

Bevorzugt handelt es sich bei der ermittelten Umfeldgröße um ein erkanntes Objekt und/oder eine erkannte Objektklasse, welche(s) eine Lichtadaption erfordert, oder eine hierfür charakteristische Größe. Beispielsweise handelt es sich bei dem erkannten Objekt bzw. der erkannten Objektklasse um einen anderen Verkehrsteilnehmer, ein Verkehrsschild, ein Ortsschild, eine Infrastruktureinrichtung, einen Tunnel, eine Brücke, ein Siedlungsgebiet und dergleichen.

Bevorzugt erfolgt die Ermittlung einer Umfeldgröße unter Verwendung der Umfelddaten eines Fahrzeugpositions-Sensoreinrichtung, insbesondere eines GPS-Sensors. In diesem Fall kann die Umfeldgröße (insbesondere auch ausschließlich) charakteristisch sein für die (derzeitige) Position des Fahrzeugs.

Bevorzugt erfolgt die Ermittlung einer Umfeldgröße unter Verwendung von über eine Kommunikationseinrichtung empfangene Signale. Bevorzugt werden Signale von anderen Verkehrsteilnehmern und/oder Infrastruktureinrichtungen empfangen, wobei die Signale für eine Umfeldsituation charakteristisch sind, welche eine Lichtadaption erforderlich macht. Beispielsweise handelt es sich bei dem Signal um eine Mitteilung eines anderen Fahrzeugs über dessen Anwesenheit oder das Vorhandensein einer die Sicht beeinträchtigenden Gegebenheit z.B. eine vorausliegende Nebelbank, Regenschauer, etc. Ebenso könnte es sich um die Übermittlung eines Signals einer Infrastruktureinrichtung, beispielsweise einer Einrichtung zur Anzeige von Verkehrszeichen an einer Tunneleinfahrt handeln, welche die Notwendigkeit des Einschaltens der Beleuchtung übermittelt und/oder aus deren Signal eine derartige Notwendigkeit ableitbar ist (etwa bei der Information, dass es sich bei einem in Fahrtrichtung voraus befindlichen Objekt um einen Tunnel handelt).

Bei einem vorteilhaften Verfahren ist die Umfeldgröße charakteristisch für einen Verkehrsteilnehmer, ein Verkehrszeichen, eine Infrastruktureinrichtung oder dergleichen oder Kombinationen hiervon.

In einem weiteren Schritt des erfindungsgemäßen Verfahrens wird auf Grundlage der aus den Umfelddaten ermittelten Umfeldgröße eine Helligkeitsgröße von einer nichtflüchtigen Speichereinrichtung abgerufen, wobei die Helligkeitsgröße für die Umfeldsituation charakteristisch ist.

Bevorzugt ist die Helligkeitsgröße charakteristisch für eine (insbesondere im Vorfeld) ermittelte Umfeldsituation und basiert insbesondere auf einem Nutzerverhalten eines Nutzers eines Fahrzeugs bezogen auf die ermittelte Umfeldsituation. Bevorzugt handelt es sich bei dem Nutzerverhalten um eine Adaption einer Lichtfunktion der Beleuchtungseinrichtung des Fahrzeugs. Bevorzugt basiert die Helligkeitsgröße auf einer Vielzahl erfasster Nutzerverhalten eines und bevorzugt einer Vielzahl von Nutzern (eines und insbesondere einer Vielzahl insbesondere verschiedener Fahrzeuge) in Bezug auf die ermittelte Umfeldsituation oder eine vergleichbare Umfeldsituation. Bevorzugt ist die Helligkeitsgröße nicht für ein konkretes Fahrzeug spezifisch, sondern beinhaltet Daten, welche für eine Vielzahl an verschiedener Fahrzeuge angewendet werden können.

Bevorzugt ist wenigstens eine Helligkeitsgröße, besonders bevorzugt ist eine Vielzahl an Helligkeitsgrößen auf einer nichtflüchtigen Speichereinrichtung abgelegt. Bei der nichtflüchtigen Speichereinrichtung kann es sich um einen lokalen Datenspeicher des Fahrzeugs oder bevorzugt um eine externe Speichereinrichtung handeln. Die (im Vorfeld) abgelegten Helligkeitsgrößen werden bevorzugt nach einem weiter unten beschriebenen Verfahren erzeugt. Bei der externen Speichereinrichtung kann es sich insbesondere eine (nachfolgend näher beschriebene) Cloud-basierte und/oder zentrale Speichereinrichtung handeln. Unter einer zentralen Speichereinrichtung ist insbesondere ein in Bezug auf das Fahrzeug externer Server, insbesondere ein Backend-Server, zu verstehen. Der externe Server ist beispielsweise ein Backend eines Fahrzeugherstellers oder eines Dienstanbieters, welcher dazu eingerichtet ist, Helligkeitsgrößen in Bezug auf eine Vielzahl von Fahrzeugen zu verwalten und/oder zu ermitteln. Die Funktionen des Backend bzw. des externen Servers können dabei auf (externen) Serverfarmen durchgeführt werden. Beim (externen) Server kann es sich um ein verteiltes System handeln. Der externe Server und/oder das Backend kann Cloud-basiert sein.

In einem weiteren Schritt des erfindungsgemäßen Verfahrens wird auf Grundlage der abgerufenen Helligkeitsgröße eine Steuergröße zur Adaption der wenigstens einen Lichtfunktion der Beleuchtungseinrichtung des Fahrzeugs ermittelt. Bevorzugt wird auf Grundlage der Steuergröße die wenigstens eine Lichtfunktion der Beleuchtungseinrichtung gesteuert, besonders bevorzugt ohne (jegliche) Nutzereingabe. Denkbar ist, dass die Adaption der wenigstens einen Lichtfunktion automatisch und ausschließlich auf Grundlage von Daten bezogen auf das Umfeld des Fahrzeugs (insbesondere den Umfelddaten) vorgenommen wird.

Bevorzugt wird hierbei auf Grundlage der Helligkeitsgröße, welche bevorzugt fahrzeugunspezifische Anweisungen bzw. Einstellungen einer Lichtfunktion der Beleuchtungseinrichtung für eine Vielzahl an verschiedenen Fahrzeugen beinhaltet, eine Steuergröße ermittelt, welche eine Adaption wenigstens einer Lichtfunktionen der Beleuchtungseinrichtung des Fahrzeugs an die Umfeldsituation ermöglicht.

Bei der Anwendung des erfindungsgemäßen Verfahrens ist es denkbar, dass zeitgleich oder innerhalb eines (kurzen und/oder vorgegebenen) Zeitintervalls mehr als eine eine Lichtadaption erfordernde Umfeldsituation erkannt werden. Hierbei wäre es möglich, dass die in Folge der erkannten Umfeldsituationen bzw. der daraus ermittelten Umfeldgrößen das Abrufen von mehreren Helligkeitsgrößen erfolgt, welche unter Umständen miteinander konkurrierende Adaptionen der Lichtfunktion der Beleuchtungseinrichtung des Fahrzeugs nach sich ziehen würde.

Beispielsweise veranlasst die Einfahrt in einen stark abgeschatteten Bereich (erste Umfeldgröße) das Einschalten des Fernlichtes, während zugleich ein entgegenkommendes Fahrzeug (zweite Umfeldgröße) eine Abschwächung des Fernlichts, insbesondere im Bereich der Fahrbahn des entgegenkommenden Fahrzeugs veranlasst.

Bei einem bevorzugten Verfahren erfolgt die Ermittlung einer Steuergröße zur Adaption der wenigstens einen Lichtfunktion der Beleuchtungseinrichtung des Fahrzeugs auf Grundlage von wenigstens zwei Helligkeitsgrößen, insbesondere unter Berücksichtigung einer Beeinträchtigung anderer Verkehrsteilnehmer und/oder einem Verkehrsumfeld.

Dies bietet den Vorteil, dass eine Vielzahl von Aspekten der erkannten Umfeldsituation berücksichtigt werden können und eine optimale Adaption einer Lichtfunktion der Beleuchtungseinrichtung des Fahrzeug ausgeführt werden kann, insbesondere in Hinblick auf die Anforderungen des Fahrers, die Anforderungen anderer Verkehrsteilnehmer und dergleichen.

Die vorliegende Erfindung ist weiterhin gerichtet auf ein Verfahren zur Bereitstellung wenigstens einer Helligkeitsgröße zur automatischen Adaption wenigstens einer Lichtfunktion einer Beleuchtungseinrichtung eines Fahrzeugs an eine Umfeldsituation des Fahrzeugs. Hierbei wird ein Nutzerverhalten wenigstens eines Nutzers eines Fahrzeugs (insbesondere durch das Fahrzeug und insbesondere durch Überwachung einer Eingabeeinrichtung des Fahrzeugs, etwa durch Erfassung einer Benutzereingabe) erfasst, wobei das Nutzerverhalten für eine manuelle Adaption wenigstens einer Lichtfunktion einer Beleuchtungseinrichtung des Fahrzeugs an eine Umfeldsituation des Fahrzeugs (durch den Nutzer) charakteristisch ist. Unter dem Erfassen eines Nutzerverhaltens wird insbesondere verstanden, dass für das Nutzerverhalten charakteristische Daten erfasst werden.

In einem weiteren Schritt des erfindungsgemäßen Verfahrens werden (insbesondere von dem Fahrzeug und bevorzugt von einer Sensoreinrichtung des Fahrzeugs) Umfelddaten erfasst, wobei die Umfelddaten für die Umfeldsituation des Fahrzeugs charakteristisch sind.

In einem weiteren Schritt des erfindungsgemäßen Verfahrens wird wenigstens ein Datensatz erzeugt, welcher das Nutzerverhalten (insbesondere die für das Nutzerverhalten charakteristische Daten) in Bezug auf die Umfeldsituation sowie dem Nutzerverhalten zugeordnete erfasste Umfelddaten für diese Umfeldsituation umfasst.

Bevorzugt wird eine Vielzahl derartiger Datensätze bevorzugt mittels einer Vielzahl verschiedener Fahrzeuge und/oder Nutzerverhalten (insbesondere verschiedener Nutzer) erzeugt.

In einem weiteren Schritt des erfindungsgemäßen Verfahrens wird wenigstens eine Helligkeitsgröße auf Grundlage des wenigstens einen Datensatzes und bevorzugt auf Grundlage der Vielzahl von Datensätze (in einem computer-implementierten Verfahrensschritt) erzeugt.

Bevorzugt wird der wenigstens eine Datensatz und besonders bevorzugt wird die Vielzahl von Datensätzen einer insbesondere Prozessor-basierten Erzeugungseinrichtung zur Erzeugung der wenigstens einen Helligkeitsgröße bereitgestellt.

In einem weiteren Schritt des erfindungsgemäßen Verfahrens wird die wenigstens eine Helligkeitsgröße auf einer nichtflüchtigen Speichereinrichtung abgelegt zur Bereitstellung an wenigstens ein Fahrzeug und bevorzugt zur Bereitstellung an eine Vielzahl von Fahrzeugen.

Das vorgeschlagene Verfahren bietet den Vorteil, dass die Erzeugung der Helligkeitsdaten auf einem Nutzerverhalten beruht, d.h. es kann von einem Nutzerverhalten gelernt werden.

Bevorzugt handelt es sich bei einem erfassten Nutzerverhalten um eine Adaption wenigstens einer Lichtfunktion der Beleuchtungseinrichtung des Fahrzeugs, insbesondere um einen Ein- und/oder Ausschaltvorgang wenigstens einer Lichtfunktion der Beleuchtungseinrichtung des Fahrzeugs, insbesondere um das Ein- oder Ausschalten des Abblendlichtes, des Fernlichtes, des Standlichtes, des Tagfahrlichtes der Nebelschlussleuchte, der Nebelscheinwerfer und dergleichen. Insbesondere umfasst die Adaption einer Lichtfunktion der Beleuchtungseinrichtung eine Anpassung der Helligkeit bzw. Intensität der Lichtfunktion und/oder eine Änderung des Ausleuchtungsbereichs der Fahrbahn.

Bevorzugt umfasst die Beleuchtungseinrichtung eines Fahrzeugs Beleuchtungsmittel für ein vorderes und/oder hinteres Abblendlicht, ein Fernlicht, ein vorderes, seitliches und/oder hinteres Blinklicht, ein Standlicht, ein Tagfahrlicht, einen Nebelscheinwerfer, ein Bremslicht, ein Rückfahrlicht, eine Nebelschlussleuchte und/oder dergleichen sowie Kombinationen hiervon.

Bevorzugt umfasst eine Lichtfunktion der Beleuchtungseinrichtung ein vorderes und/oder hinteres Abblendlicht, ein Fernlicht, ein vorderes, seitliches und/oder hinteres Blinklicht, ein Standlicht, ein Tagfahrlicht, ein Nebelscheinwerfer, ein Bremslicht, ein Rückfahrlicht, eine Nebelschlussleuchte und/oder dergleichen sowie Kombinationen hiervon.

Bevorzugt ist wenigstens eine Lichtfunktion (insbesondere manuell von einem Nutzer) adaptierbar, insbesondere ist die Helligkeit bzw. Intensität einer Lichtfunktion und/oder der Abstrahlwinkel der Lichtfunktion und/oder der Abstrahlwinkel der Lichtfunktion in Bezug auf die Fahrbahn und/oder die räumliche Ausdehnung des von einer Lichtfunktion ausgeleuchteten Bereichs adaptierbar.

Bevorzugt ist die manuelle Adaption der wenigstens einen Lichtfunktion der Beleuchtungseinrichtung des Fahrzeugs durch den Nutzer für eine Umfeldsituation charakteristisch. Eine Umfeldsituation kann hierbei die Anwesenheit und/oder das Eintreten und/oder Verlassen eines anderen Verkehrsteilnehmers in den Sichtbereich des Nutzers sein, insbesondere in den von der Lichtfunktion der Beleuchtungseinrichtung des Fahrzeugs ausgeleuchteten Bereich. So kann das Erkennen eines anderen Verkehrsteilnehmers den Nutzer dazu veranlassen, beispielsweise das Fernlicht abzuschalten oder im Gegenzug, sobald der andere Verkehrsteilnehmer sich nicht mehr in einem relevanten Bereich d.h. dem auszuleuchtenden Bereich (Fernlicht) befindet, dazu veranlassen, zur Verbesserung der Sicht (des Nutzers) das Fernlicht wieder anzuschalten.

Denkbar ist auch, dass es sich bei der Umfeldsituation um eine Anwesenheit und/oder ein Fahrverhalten des anderen Verkehrsteilnehmers in dem Umfeld des Nutzers handelt.

Bevorzugt umfasst eine Umfeldsituation die Anwesenheit einer Infrastruktureinrichtung, insbesondere einer die eine manuelle Adaption einer Lichtfunktion der Beleuchtungseinrichtung des Fahrzeugs erforderlich macht. Denkbar ist hierbei das Erkennen eines Tunnels, eines Siedlungsgebietes, einer Straßenunterführung und dergleichen. Beispielsweise das Erkennen eines Tunnels kann den Nutzer zum Einschalten des Abblendlichtes veranlassen und nach dem Verlassen des Tunnels kann dieses wieder ausgeschaltet werden. Denkbar wäre auch, dass der Nutzer beim Erreichen eines Siedlungsgebietes ein zuvor angeschaltetes Fernlicht ausschaltet.

Bevorzugt umfasst eine Umfeldsituation das Auftreten einer unübersichtlichen Situation, beispielsweise ein kurviger Streckenverlauf einer vergleichsweise schmalen Straße. In einem solchen Fall, insbesondere zu einer Tageszeit in der ohnehin das Abblendlicht eingeschaltet sein sollte, kann der Fahrer möglicherweise das Fernlicht kurzzeitig einschalten, um durch dessen Lichtkegel einen potentiell entgegenkommenden Verkehrsteilnehmer auf sich aufmerksam zu machen.

Bevorzugt umfasst eine Umfeldsituation das Erkennen von Verkehrszeichen, insbesondere von solchen, die eine manuelle Adaption einer Lichtfunktion der Beleuchtungseinrichtung des Fahrzeugs erforderlich machen. Beispielsweise kann es sich hierbei um ein Schild mit der Aufschrift "Licht anschalten", insbesondere in Verbindung mit einer Infrastruktureinrichtung, beispielsweise einem Tunnel, einer Brücke und dergleichen handeln. Weiterhin ist es denkbar, dass es sich bei dem erkannten Verkehrszeichen um ein Ortsschild handelt, welches den Nutzer beispielsweise veranlasst, ein zuvor eingeschaltetes Fernlicht zu deaktivieren. Beispielsweise kann es sich um Verkehrsschilder handeln, die einen Fahrer auf eine potentielle Gefahr schlechter Sicht hinweisen, beispielsweise Wechselverkehrszeichen auf einer Autobahn.

Bevorzugt umfasst eine Umfeldsituation das Auftreten einer die Sicht- und/oder Lichtverhältnisse verändernde, insbesondere verschlechternde Situation, insbesondere das Auftreten eines Niederschlags (Regen, Schnee, Hagel und dergleichen), Auftreten von Nebel, eine nasse Fahrbahn, Spritzwasser, Sandsturm und dergleichen. In solchen Fällen könnte der Fahrer eine Adaption einer Lichtfunktion der Beleuchtungseinrichtung vornehmen, um auf die Situation angepasste Lichtverhältnisse erhalten. Beispielsweise umfasst dies das Einschalten der Nebelscheinwerfer und/oder Nebelschlussleuchte im Falle von Nebel, Regen und/oder Schnee bei Sichtweiten unter 50 Meter. Beispielsweise dürfen Nebelscheinwerfer oder das Schlechtwetterlicht nur bei Regen, Schnee oder Nebel eingeschaltet werden. Die Nebelschlussleuchte darf ausschließlich bei Nebel und einer Sichtweite kleiner 50 m eingeschaltet werden. Weiterhin denkbar ist das Einschalten des Abblendlichtes bei leichten Niederschlägen, Auftreten von Nebel und dergleichen, Abschalten des Fernlichtes bei Nebel usw.

Insbesondere kann eine Umfeldsituation witterungsbedingt und/oder infrastruktur-bedingt Auswirkungen auf das Erfordernis der Adaption der Lichtfunktion haben.

In einem weiteren Schritt des erfindungsgemäßen Verfahrens werden Umfelddaten mittels wenigstens einer Sensoreinrichtung erfasst, wobei die Umfelddaten für die Umfeldsituation des Fahrzeugs charakteristisch sind.

Bevorzugt ist die wenigstens eine Sensoreinrichtung aus einer Gruppe von Sensoreinrichtungen umfassend wenigstens einen Lichtsensor, wenigstens einen Regensensor, wenigstens einen Abstandsensor, wenigstens einen Fahrzeugpositionssensor, insbesondere einen GPS-Sensor, wenigstens eine Bildaufnahmeeinrichtung, insbesondere eine Kamera, besonders bevorzugt eine Rückfahrkamera, besonders bevorzugt eine Frontkamera, eine Stereokamera, einen thermischen Sensor, einen Ultraschallsensor, einen Lidar-Sensor, einen Radar-Sensor, und dergleichen sowie Kombinationen hiervon ausgewählt ist.

Bevorzugt werden die Umfelddaten (im Wesentlichen) zu einem Zeitpunkt erfasst, zu dem auch das Nutzerverhalten erfasst wird. Bevorzugt sind die erfassten Umfelddaten für die Umfeldsituation und den Zeitpunkt, insbesondere für die Tageszeit, charakteristisch. Denkbar ist auch, dass ermittelt wird, ob das Nutzerverhalten mit dem Auftreten der Umfeldsituation und/oder der Tageszeit korreliert ist. Beispielsweise wird hierzu ermittelt, ob ein Nutzer bei identischer und/oder vergleichbarer Umfeldsituation in identischer und/oder vergleichbarer Weise reagiert.

Bevorzugt werden beim Erfassen des Nutzerverhaltens, insbesondere zum Zeitpunkt des Erfassens des Nutzerverhaltens, Umfelddaten durch wenigstens eine Sensoreinrichtung, bevorzugt durch wenigstens zwei Sensoreinrichtungen und besonderes bevorzugt durch eine Vielzahl an Sensoreinrichtungen (simultan) erfasst.

Bevorzugt werden (zum Zeitpunkt der Erfassung des Nutzerverhaltens) Umfelddaten mit einem Lichtsensor erfasst. Die erhaltenen Daten über die vorherrschenden Lichtverhältnisse bzw. Helligkeit sind bevorzugt hierbei für den Zeitpunkt des Ein- oder Ausschalten einer Lichtfunktion, insbesondere eines Abblendlichtes, eines Fernlichtes, eines Nebelscheinwerfers, einer Nebelschlussleuchte und dergleichen, charakteristisch.

Bevorzugt werden (zum Zeitpunkt der Erfassung des Nutzerverhaltens) Umfelddaten mit einem Regensensor erfasst. Durch das Erfassen der Umfelddaten des Regensensors kann dem erfassten Nutzerverhalten zugeordnet werden, welche Art von Niederschlag (Schnee, Regen) oder Sichtbeeinträchtigung (Nebel) vorliegt und/oder die Intensität des Niederschlags bzw. der Sichtbeeinträchtigung. Bevorzugt liegt eine Kombination von Licht- und Regensensor vor, sodass die Umfelddaten bezüglich Licht und Regen (insbesondere Schnee, Nebel und dergleichen) simultan erfasst und einander zugeordnet werden können.

Bevorzugt wird ermittelt, ob den Umfelddaten und/oder der Umfeldsituation, welche die (manuelle) Adaption der Lichtfunktion erforderlich machen, ein witterungsbedingter und/oder verkehrsbedingter und/oder Fahrbahn-bedingter (wie etwa innerortiger Fahrbahnabschnitt) Auslöser zugrunde liegt.

Bevorzugt werden (zum Zeitpunkt der Erfassung des Nutzerverhaltens) Umfelddaten mit einem Abstandssensor, insbesondere mit einem Ultraschallsensor, insbesondere mit einem Lidar-Sensor und/oder insbesondere mit einem Radar-Sensor und/oder bevorzugt mit einem optischen Abstandssensor und/oder einer Kamera und/oder einem Stereo-Kamerasystem erfasst. Ein Ultraschallsensor ist dabei bevorzugt (ausschließlich) bei kurzen Distanzen, wie z.B. in Ein- oder Ausparksituationen, anwendbar. Denkbar wäre, dass zum Zeitpunkt der Erfassung des Nutzerverhaltens der Abstand zu der das Nutzerverhalten auslösenden Situation bzw. zu dem das Nutzerverhalten auslösende Objekt oder eine hierfür charakteristische Größe ermittelt wird. Beispielsweise kann die Entfernung ermittelt werden zu einem vorausfahrenden Fahrzeug und/oder einem entgegenkommenden Fahrzeug, bei der der Nutzer das Fernlicht ausschaltet. Beispielsweise kann die Entfernung zu einem Verkehrsschild, insbesondere einem Ortsschild und/oder einer Infrastruktureinrichtung, insbesondere einem Tunnel, eine Brücke und dergleichen, bestimmt werden, bei der Nutzer eine Adaption einer Lichtfunktion der Beleuchtungseinrichtung vornimmt.

Bevorzugt wird zur Ermittlung der Helligkeitsgröße ermittelt, ob eine Korrelation zwischen dem Nutzerverhalten und der potentiellen, das Nutzerverhalten auslösenden Situation oder Objekt besteht.

Bevorzugt werden (zum Zeitpunkt der Erfassung des Nutzerverhaltens) Umfelddaten mit einem Positionssensor, insbesondere mit einem GPS-Sensor, erfasst. Bevorzugt kann einem Nutzerverhalten eine (insbesondere genaue) Position des Fahrzeugs zugeordnet werden kann.

Bevorzugt wird zur Ermittlung bzw. zur Erzeugung der Helligkeitsgröße die Position des Fahrzeugs mit (topographischen) Kartendaten und/oder Navigationsdaten verglichen.

Bevorzugt wird auf Grundlage dieses Vergleichs ein Fahrbahnverlauf und/oder eine Topologie der Fahrbahnsituation bzw. der Verkehrswege in dem Umfeld des Fahrzeugs ermittelt. Beispielsweise kann das (erfasste) Umfeld des Fahrzeugs nach topographischen Objekten und/oder Objektteilen sowie bevorzugt deren gegenseitigen topologischen Beziehungen strukturiert. So kann beispielsweise ermittelt werden, ob das Nutzerverhalten des Nutzers des Fahrzeugs darauf zurückzuführen ist, dass sich das Fahrzeug einer Kreuzung und/oder einer Ortschaft nähert. So kann beispielsweise ermittelt werden, dass die Nutzer üblicherweise bereits in einer vorgegebenen Entfernung vor Erreichen des Ortschilds eine Adaption der Lichtfunktion vornehmen.

Bevorzugt wird ermittelt, ob das Nutzerverhalten ausgelöst wird durch eine (bestimmte) Topologie der Fahrbahnsituation bzw. der Verkehrswege bzw. durch einen Fahrbahnverlauf.

Bevorzugt kann einem Nutzerverhalten eine Topologie im Umfeld des Fahrzeugs zugeordnet werden. Bevorzugt kann die erzeugte Helligkeitsgröße einer (vorgegebenen bzw. bestimmten) Topologie zugeordnet werden und/oder eine derartige Zuordnung auf der nichtflüchtigen Speichereinrichtung abgelegt werden.

Bevorzugt werden (zum Zeitpunkt der Erfassung des Nutzerverhaltens) Umfelddaten mit einer Kamera, bevorzugt mit einer Rückfahrkamera, besonders bevorzugt mit einer Frontkamera, besonders bevorzugt mit einer Stereokamera, erfasst. Bei den erfassten Umfelddaten handelt es sich bevorzugt um ein ortsaufgelöstes Bild, welches für das Umfeld bzw. Umfeldsituation des Fahrzeugs charakteristisch ist. Hierbei ist es denkbar, dass zum Zeitpunkt der Erfassung des Nutzerverhaltens ein ortsaufgelöstes Bild des das Nutzerverhalten auslösenden Objektes bzw. der das Nutzerverhalten auslösenden Situation aufgenommen wird. Bevorzugt werden unter Verwendung von Verfahren zur Erkennung von Objekten und/oder Klassifizierung von Objekten solche Objekte und/oder Objektklassen ermittelt, welche für eine Umfeldsituation charakteristisch sind.

In einem weiteren Schritt des erfindungsgemäßen Verfahrens wird wenigstens ein Datensatz und bevorzugt eine Vielzahl von Datensätzen erzeugt, wobei der Datensatz (jeweils) das Nutzerverhalten in Bezug auf die Umfeldsituation sowie dem Nutzerverhalten zugeordnete erfasste Umfelddaten für diese Umfeldsituation umfasst.

Bevorzugt umfasst der wenigstens eine (insbesondere jeder) Datensatz das Nutzerverhalten (bzw. hierfür charakteristische Daten) in Bezug auf die Umfeldsituation und dem Nutzerverhalten zugeordnete erfasste Umfelddaten von wenigstens einer Sensoreinrichtung, bevorzugt von wenigstens zwei Sensoreinrichtungen und besonders bevorzugt von einer Vielzahl an Sensoreinrichtungen.

Ein Datensatz im Sinne der vorliegenden Erfindung mit den Umfelddaten einer Sensoreinrichtung beinhaltet beispielsweise das Einschalten des Abblendlichtes (Nutzerverhalten) und die zugehörigen Daten eines Lichtsensors. Ein weiterer Datensatz beinhaltet beispielsweise das Einschalten des Abblendlichtes (Nutzerverhalten) und die zugehörigen Daten eines Abstandsensors. Ein weiterer Datensatz beinhaltet beispielsweise das Einschalten des Abblendlichtes (Nutzerverhalten) und die zugehörigen Daten eines GPS-Sensors. Ein weiterer Datensatz beinhaltet das Einschalten des Abblendlichtes (Nutzerverhalten) und die zugehörigen Daten einer Kamera, insbesondere ein ortsaufgelöstes Bild und davon abgeleitet ein erkanntes Objekt bzw. eine erkannte Objektklasse.

Bevorzugt umfasst ein Datensatz die Umfelddaten von wenigstens zwei oder bevorzugt einer Vielzahl von Sensoreinrichtungen. Beispielsweise beinhaltet ein Datensatz das Einschalten des Abblendlichtes (Nutzerverhalten) und die Daten eines Lichtsensors und die Daten eines Abstandssensors. Ebenso ist es denkbar, dass dieser Datensatz alternativ oder zusätzlich die Position des Fahrzeugs (GPS-Daten) und/oder ein ortsaufgelöster Bild einer Kamera und/oder daraus abgeleitet ein erkanntes Objekt bzw. erkannte Objektklasse umfasst.

Ein beispielhafter Datensatz beinhaltet das Einschalten des Abblendlichtes (Nutzerverhalten) bei Erkennen einer Tunneleinfahrt (Umfelddaten der ersten Sensoreinrichtung (Kamera)) in 50 Metern Entfernung (Umfelddaten der zweiten Sensoreinrichtung (Abstandssensor)) an einer bestimmen Position (GPS-Koordinaten, Umfelddaten der dritten Sensoreinrichtung). Beispielsweise könnten aus der Aufnahme eines ortsaufgelösten Bildes (Umfelddaten der ersten Sensoreinrichtung) zusätzlich Informationen über die Tunneleinfahrt, wie deren Breite, Höhe und dergleichen ermittelt werden und in dem Datensatz abgelegt werden.

In einem weiteren Schritt des erfindungsgemäßen Verfahrens wird wenigstens eine Helligkeitsgröße (und bevorzugt wird eine Vielzahl von Helligkeitsgrößen) auf Grundlage des wenigstens einen Datensatzes und bevorzugt auf Grundlage der Vielzahl von Datensätzen erzeugt. Bevorzugt wird die Helligkeitsgröße auf Grundlage eines Datensatzes, bevorzugt auf Grundlage von zwei Datensätzen und besonders bevorzugt auf Grundlage einer Vielzahl von Datensätzen erzeugt.

Dabei kann das Verfahren zur Bereitstellung wenigstens einer Helligkeitsgröße eine (jeweilige) Ermittlung einer Umfeldgröße auf Grundlage der (erfassten) Umfelddaten, insbesondere entsprechend einer Ausführungsform wie im Rahmen des obig beschriebenen Verfahren zur automatischen Adaption wenigstens einer Lichtfunktion einer Beleuchtungseinrichtung eines Fahrzeugs beschrieben. Insbesondere kann es sich bei der Umfeldgröße um eine obig beschriebene Größe handeln.

In einem vorteilhaften Verfahren zur Erzeugung der wenigstens einen Helligkeitsgröße wird eine Vielzahl an Datensätzen verwendet, wobei sich die Datensätze paarweise durch das verwendete Fahrzeug und/oder einen verschiedenen Nutzer und/oder einen verschiedenen Erfassungszeitpunkt der Umfelddaten und/oder des Nutzerverhaltens (des jeweiligen Datensatzes) unterschieden.

Bevorzugt wird auf Grundlage der Vielzahl von Datensätzen abgeleitet, ob das (jeweilige) Nutzerverhalten auf eine witterungsbedingte und/oder eine nutzerbedingte und/oder infrastrukturbedingte und/oder verkehrsbedingte und/oder topologiebedingte Ursache zurückzuführen ist. Bevorzugt wird hierzu das jeweilige Nutzerverhalten der Vielzahl von Datensätzen in Hinblick auf die jeweiligen Umfelddaten, wie die jeweilige Position des Fahrzeugs und/oder die Topologie und/oder eine Umfeldsituation, ausgewertet. So kann etwa die Vielzahl von Datensätzen eingeteilt werden in Bezug auf eine bestimmte Fahrzeugposition, beispielsweise eine vorgegebene Entfernung zu einem Tunnel bzw. zu einem eine Adaption einer Lichtfunktion beeinflussenden Objekt. Dann kann das Nutzerverhalten all dieser Datensätze miteinander verglichen und hieraus eine Helligkeitsgröße erzeugt werden. Hier kann es sich beispielsweise um eine Durchschnittsentfernung zum Tunnelanfang handeln, bei welcher typischerweise eine Fahrzeugbeleuchtung angeschalten wird.

Das bietet den Vorteil, dass die erzeugten Helligkeitsgrößen einen allgemein gültigen und nutzerübergreifenden Charakter aufweisen und nicht für eine bestimmte Person, ein bestimmtes Fahrzeug, eine bestimmte Tageszeit und dergleichen spezifisch sind. Darüber hinaus kann hierdurch vorteilhafterweise sehr spezielles Nutzerverhalten oder unter Umständen sogar fehlerhaftes Nutzerverhalten erkannt werden und bei der Erzeugung einer Helligkeitsgröße vernachlässigt werden.

Bevorzugt werden zur Erzeugung einer Helligkeitsgröße eine Vielzahl an Datensätzen verwendet, welche einem konkreten Nutzerverhalten (beispielsweise das Anschalten des Abblendlichtes vor einer konkreten Tunneleinfahrt) zugeordnet werden könnten, sich aber durch den Nutzer unterscheiden. Ebenso ist es denkbar, dass sich die Datensätze durch das zu deren Erzeugung verwendete Fahrzeug unterscheiden. Bevorzugt werden Datensätze von mindestens 10, bevorzugt mindestens 100 und besonders bevorzugt mindestens 1000 Fahrzeugen verwendet.

Bevorzugt umfasst eine Vielzahl an Datensätzen ein Nutzerverhalten eines Nutzers eines Fahrzeugs, aber zu verschiedenen Zeitpunkten, bevorzugt verschiedenen Tageszeiten und besonders bevorzugt zu verschiedenen Jahreszeiten.

Bevorzugt umfasst eine Vielzahl an Datensätzen ein Nutzerverhalten eines Nutzers eines Fahrzeugs, aber unter verschiedenen Witterungsverhältnissen, beispielsweise bei Sonnenschein, bei Wolken, bei Regen, bei Schnee und/oder bei Nebel und dergleichen.

Bevorzugt werden bei der Erzeugung der Helligkeitsgröße die hierfür verwendeten Datensätze unter Verwendung mathematischer (stochastischer) Methoden untereinander verglichen, gemittelt, interpoliert und/oder Ausreißer bestimmt und/oder verworfen. Bevorzugt erfolgt hierbei eine Unterteilung bzw. eine Einstufung der Datensätze in ein nutzerspezifisches Verhalten oder ein allgemein gültiges bzw. nutzerübergreifendes Verhalten.

Bevorzugt wird die Helligkeitsgröße (und bevorzugt die Vielzahl von Helligkeitsgrößen) aus einem erfassten Nutzerverhalten und aus diesem zugeordneten Umfelddaten und/oder hieraus abgeleiteter Daten mittels eines (computer-implementierten) Modells des maschinellen Lernens zur Erzeugung einer Helligkeitsgröße erzeugt. Bevorzugt basiert das Modell maschinellen Lernens zur Erzeugung einer Helligkeitsgröße, auf einem (künstlichen) neuronalen Netzwerk. Ein solches neuronales Netzwerk kann beispielsweise als tiefes neuronales Netzwerk (Deep Neural Network, DNN) und/oder ein sogenanntes Convolutional Neural Network (CNN) (dt. Faltungsnetzwerk) und/oder ein rekurrentes Neuronales Netzwerk (RNN, engl. Recurrent Neural Network) ausgestaltet sein.

Bevorzugt handelt es sich bei dem Modell zur Erzeugung einer Helligkeitsgröße um ein, insbesondere trainierbares, Modell maschinellen Lernens, welches einen Satz insbesondere trainierbarer, Parameter umfasst, welche auf Werte eingestellt sind, die als Ergebnis eines Trainingsprozesses gelernt wurden.

Bevorzugt werden die erzeugten Datensätze oder hiervon abgeleitete Daten mittels des insbesondere trainierten (künstlichen) neuronalen Netzwerks verarbeitet. Bevorzugt werden dem Modell zur Erzeugung einer Helligkeitsgröße bzw. dem (künstlichen) neuronalen Netzwerk die (zu verarbeitenden) Datensätze (oder hiervon abgeleitete Daten) als Eingangsgrößen zugeführt. Dabei kann beispielsweise je Datensatz wenigstens eine Umfeldgröße auf Grundlage der Umfelddaten ermittelt werden.

Denkbar ist auch, dass als Eingangsgrößen (je Datensatz) wenigstens eine Umfeldgröße, welche auf Grundlage der Umfelddaten eines Datensatzes ermittelt wurde, und bevorzugt die für das Nutzerverhalten charakteristischen Daten des Datensatzes (oder hiervon abgeleitete Daten) zugeführt werden.

Bevorzugt bildet das Modell zur Erzeugung einer Helligkeitsgröße bzw. das künstliche neuronale Netzwerk die Eingangsgrößen in Abhängigkeit einer parametrierbaren Verarbeitungskette auf Ausgangsgrößen ab.

Bevorzugt ist als Ausgangsgröße die Helligkeitsgröße oder bevorzugt als Ausgangsgrößen eine Vielzahl von Helligkeitsgrößen gewählt. Bevorzugt sind als Ausgangsgrößen die Helligkeitsgröße(n) und jeweils wenigstens eine (bevorzugt jeweils genau einer) der Helligkeitsgröße zugeordnete Umfeldgröße gewählt.

Bevorzugt wird das Modell maschinellen Lernens zur Erzeugung einer Helligkeitsgröße bzw. das künstliche neuronale Netzwerk unter Verwendung vorgegebener Trainingsdaten trainiert, wobei durch das Training die parametrierbare Verarbeitungskette parametriert wird. Bevorzugt werden als Trainingsdaten eine (bzw. die) Vielzahl erzeugter Datensätze verwendet.

Bevorzug umfasst das zur Erzeugung einer Helligkeitsgröße verwendete Nutzerverhalten eine Adaption einer Lichtfunktion der Beleuchtungseinrichtung des Fahrzeugs. Hierbei kann es sich um ein Ein- oder Ausschalten einer Lichtfunktion, eine Anpassung des Abstrahlwinkels einer Lichtfunktion, eine Anpassung des durch die Lichtfunktion ausgeleuchteten Bereichs und dergleichen oder Kombinationen hiervon handeln. Insbesondere werden zur Erzeugung von Helligkeitsgrößen aus dem Nutzerverhalten abgeleitete Daten verwendet. Bevorzugt umfassen die abgeleiteten Daten beispielsweise eine Zeit des Nutzerverhaltens (Dauer), eine Änderung der Helligkeit bzw. Intensität einer Lichtfunktion (z.B. eine Differenz der Helligkeit in Lumen oder eine Differenz der Intensität bzw. Lichtstärke in Candela) und/oder daran gekoppelte Spannungs- und/oder Stromstärkewerte des zugehörigen Teils der Beleuchtungseinrichtung, eine Änderung des Abstrahlwinkels (z.B. eine Differenz des Abstrahlwinkels in Grad in Bezug auf die Fahrbahnoberfläche), eine Änderung des ausgeleuchteten Bereichs (z.B. eine Differenz in Metern oder eine zugehörige prozentuale Angabe) und dergleichen.

Bevorzugt wird wenigstens ein (Trainings)-Datensatz und besonders bevorzugt eine Vielzahl von (Trainings)-Datensätzen basierend auf einem erfassten Nutzerverhalten bzw. von diesem abgeleiteten Daten und diesem zugeordneten Umfelddaten verwendet, um das Modell des maschinellen Lernens zur Erzeugung einer Helligkeitsgröße zu trainieren.

Bevorzugt umfasst das Verfahren eine automatische Evaluation der Ergebnisse, besonders bevorzugt eine Evaluation des computer-implementierten Modells zur Erzeugung einer Helligkeitsgröße, welches mit den bereitgestellten (Trainings)-Datensätzen trainiert wurde, wobei ein Evaluationsparameter bestimmt wird, welcher charakteristisch ist für die Genauigkeit des computer-implementierten Modells zur Erzeugung einer Helligkeitsgröße ist. Dabei kann der Evaluationsparameter auf Grundlage einer vorgegebenen Vielzahl von Datensätzen mittels dem trainierten Modell maschinellen Lernens zur Erzeugung einer Helligkeitsgröße ermittelt werden. Insbesondere kann der Evaluationsparameter auf Grundlage der mittels dem Modell erzeugten Helligkeitsgrößen ermittelt werden. Dabei kann zur Ermittlung des Evaluationsparameter ein von dem (bisherigen) Trainings-Datensatz verschiedener Datensatz verwendet werden.

Entspricht der Evaluierungsparameter einem vorgegebenen Wert, so kann beispielsweise der Trainingsprozess beendet werden und das computer-implementierten Modell zur Erzeugung einer Helligkeitsgröße angewendet werden. Sollte hingegen der Evaluierungsparameter nicht einem vorgegebenen Wert entsprechen, beispielsweise ist das computer-implementierte Modell zur Erzeugung einer Helligkeitsgröße zu ungenau und/oder basiert auf zu wenig und/oder ungeeigneten (Trainings)-Datensätzen, so kann ein weiterer Trainingsprozess, insbesondere unter der Verwendung anderer, insbesondere zusätzlicher (Trainings)-Datensätze erfolgen.

Bevorzugt umfasst eine Evaluation der Ergebnisse des Trainings des computer-implementierten Modells zur Erzeugung einer Helligkeitsgröße eine Einstufung eines verwendeten (Trainings)-Datensatzes, ob es sich hierbei um einen einem allgemein gültiges Nutzerverhalten bzw. einer nutzerübergreifendes Verhalten zugeordneten (Trainings)-Datensatz handelt oder um einen einem speziellen Nutzerverhalten zugeordneten (Trainings)-Datensatz handelt.

Das bietet den Vorteil, dass ein (Trainings)-Datensatz, welcher keinen allgemein gültigen Charakter bzw. kein nutzerübergreifenden Charakter aufweist als solcher identifiziert werden kann und beispielsweise bei wiederholten Trainingsprozessen des computer-implementieren Modells zur Erzeugung von Helligkeitsgrößen nicht weiter berücksichtig werden.

Bevorzugt ist das trainierte computer-implementierte Modell zur Erzeugung einer Helligkeitsgröße in der Lage, aus einem erfassten Nutzerverhalten bzw. daraus abgeleiteten Daten in Verbindung mit hierzu (simultan) erfassten Umfelddaten eine Helligkeitsgröße zu erzeugen, welche bevorzugt einen allgemeingültigen bzw. nutzerübergreifenden Charakter aufweist.

Bevorzugt ist die erzeugte Helligkeitsgröße für eine Umfeldsituation charakteristisch und beinhaltet besonders bevorzugt Information und/oder Anweisungen und/oder Einstellungsdaten zur Adaption wenigstens einer Lichtfunktion einer Beleuchtungseinrichtung eines Fahrzeugs.

Eine beispielhafte Helligkeitsgröße beinhaltet Anweisungen, Einstellungsdaten und dergleichen bzw. hierfür charakteristische Daten, welche Adaption einer Lichtfunktion bei einer erkannten Umfeldsituation, beispielsweise bei Erkennen einer Tunneleinfahrt, durchzuführen ist. Eine beispielhafte Helligkeitsgröße beinhaltet das automatische Einschalten des Abblendlichts in 50 Metern Entfernung vor der Tunneleinfahrt.

Bevorzugt wird eine Vielzahl von Umgeldgrößen bereitgestellt. Bevorzugt kann Umfelddaten eines Datensatzes jeweils mindestens eine und bevorzugt genau eine Umeldgröße zugeordnet werden. Bevorzugt wird durch eine Zuordnung einer Umfeldgröße eine Klassifizierung einer Umfeldsituation bewirkt. So kann etwa die Art einer Umfeldsituation unterschieden werden oder die Umfeldsituation durch Zuordnung einer Umfeldgröße dahingehend bewertet werden, ob diese eine Adaption einer Lichtfunktion eines Fahrzeugs erfordert. Wie obig ausgeführt, kann es sich bei der Umfeldgröße um eine entsprechend der im Rahmen des Verfahrens zur automatischen Adaption wenigstens einer Lichtfunktion einer Beleuchtungseinrichtung eines Fahrzeugs beschriebene Größe gemäß einer Ausführungsform handeln.

In einem weiteren Schritt des erfindungsgemäßen Verfahrens wird die wenigstens eine Helligkeitsgröße auf einer nichtflüchtigen Speichereinrichtung abgelegt zur Bereitstellung an wenigstens ein Fahrzeug. Bevorzugt erfolgt die Ermittlung bzw. Erzeugung und insbesondere die Bereitstellung der wenigstens einen Helligkeitsgröße auf Grundlage von einer Vielzahl von Datensätzen, wobei jeder Datensatz ein erfasstes Nutzerverhalten (oder charakteristische Daten hierfür) wenigstens eines Nutzers eines Fahrzeugs umfasst, welches charakteristisch ist für eine manuelle Adaption wenigstens einer Lichtfunktion einer Beleuchtungseinrichtung des Fahrzeugs an eine Umfeldsituation des Fahrzeugs. Weiterhin umfasst jeder Datensatz dem Nutzerverhalten zugeordnete, erfasste Umfelddaten, welche charakteristisch sind für die Umfeldsituation des Fahrzeugs. Die Vielzahl von Datensätzen können sich dabei jeweils auf voneinander verschiedene Nutzer und voneinander verschiedene Fahrzeuge beziehen.

Bevorzugt handelt es sich bei der abgerufenen Helligkeitsgröße um eine Größe, welche zeitlich vor (beispielsweise wenigstens zwei Tage, bevorzugt wenigstens 5 Tage und besonders bevorzugt wenigstens 10 Tage vor) der Erfassung von Umfelddaten (des Ego-Fahrzeugs) und/oder der Ermittlung einer Umfeldgröße ermittelt und/oder erzeugt und/oder bereitgestellt wurde. Bevorzugt wurde die Helligkeitsgröße auf Grundlage erfasster Umfelddaten einer Vielzahl verschiedener Fahrzeuge und/oder einer Vielzahl verschiedener erfasster Nutzerverhalten (insbesondere von dem Nutzer des Ego-Fahrzeugs verschiedener Nutzer) erzeugt.

Bevorzugt wird die wenigstens eine Helligkeitsgröße gemäß einem nachfolgend beschriebenen Verfahren zur Bereitstellung wenigstens einer Helligkeitsgröße zur automatischen Adaption wenigstens einer Lichtfunktion einer Beleuchtungseinrichtung eines Fahrzeugs an eine Umfeldsituation des Fahrzeugs gemäß wenigstens einer der (nachfolgend) beschriebenen Ausführungsformen erzeugt.

Bei einem vorteilhaften Verfahren handelt es sich bei der nichtflüchtigen Speichereinrichtung um einen Datenspeicher des Fahrzeugs oder um eine externe Speichereinrichtung, insbesondere eine Cloud-basierte und/oder eine zentrale Speichereinrichtung.

Unter einer zentralen Speichereinrichtung ist insbesondere ein in Bezug auf das Fahrzeug externer Server, insbesondere ein Backend-Server, zu verstehen. Der externe Server ist beispielsweise ein Backend eines Fahrzeugherstellers oder eines Dienstanbieters, welcher dazu eingerichtet ist, Helligkeitsgrößen in Bezug auf eine Vielzahl von Fahrzeugen zu verwalten und/oder zu ermitteln. Die Funktionen des Backend bzw. des externen Servers können dabei auf (externen) Serverfarmen durchgeführt werden. Beim (externen) Server kann es sich um ein verteiltes System handeln. Der externe Server und/oder das Backend kann Cloud-basiert sein.

Bei einem vorteilhaften Verfahren wird die wenigstens eine Helligkeitsgröße wenigstens einem anderen zu dem Fahrzeug verschiedenen Fahrzeug, bevorzugt in Abhängigkeit von von dem Fahrzeug erfassten Umfelddaten, bereitgestellt. Bevorzugt ist die wenigstens eine Helligkeitsgröße einer Vielzahl von verschiedenen Fahrzeugen bereitstellbar.

Besonders bevorzugt kann jedes Fahrzeug einer Vielzahl von Fahrzeugen, welches Umfelddaten erfassen kann, die für das Umfeld des Fahrzeugs charakteristisch sind, eine Kommunikationsverbindung mit der nicht-flüchtigen Speichereinrichtung aufbauen und in Abhängigkeit von den erfassten Umfelddaten eine Helligkeitsgröße abrufen.

Bevorzugt wird einem Fahrzeug, welches die in dem obig beschriebenen Verfahren zur automatischen Adaption wenigstens einer Lichtfunktion einer Beleuchtungseinrichtung eines Fahrzeugs beschriebenen Verfahrensschritte des Erfassens von Umfelddaten und bevorzugt des Ermittelns einer Umfeldgröße auf Grundlage der Umfelddaten, welche für eine eine Lichtadaption erfordernde Umfeldsituation des Fahrzeugs charakteristisch ist, basierend auf der ermittelten Umfeldgröße von der nichtflüchtigen Speichereinrichtung eine Helligkeitsgröße bereitgestellt (so dass die Helligkeitsgröße von diesem Fahrzeug abrufbar ist). Denkbar ist auch, dass die Umfeldgröße nicht von dem Fahrzeug, sondern von der Prozessor-basierten Bereitstellungseinrichtung zur Bereitstellung der wenigstens einen Helligkeitsgröße ermittelt wird.

Dies bietet den Vorteil, dass einem Nutzer eines Fahrzeugs nicht nur die Helligkeitsgrößen zur Verfügung stehen, welche basierend seinem eigenen Nutzerverhalten ermittelt wurden, sondern auch Zugriff auf die ermittelten Helligkeitsgrößen anderer Nutzer, insbesondere einer Vielzahl anderer Nutzer.

Bevorzugt wird insbesondere über eine externe Speichereinrichtung die wenigstens eine Helligkeitsgröße einer Vielzahl zu dem Fahrzeug verschiedenen Fahrzeug bereitgestellt.

Bei einem vorteilhaften Verfahren ist die wenigstens eine Helligkeitsgröße für ein Nutzerverhalten des Nutzers des Fahrzeugs charakteristisch und diesem zugeordnet.

Dies bietet den Vorteil, dass ein Nutzer die Möglichkeit hat, eine automatische Adaption einer Lichtfunktion der Beleuchtungseinrichtung auf Grundlage seiner eigenen Vorlieben durchführen zu lassen. Beispielsweise ist ein Nutzer von ängstlicher oder vorsichtiger Natur und wünscht eine frühzeitigere Adaption einer Lichtfunktion, beispielsweise das Anschalten des Abblendlichts bereits in einer größeren Entfernung zu einer Tunneleinfahrt.

Bevorzugt kann die wenigstens eine für das Nutzerverhalten des Nutzers charakteristische Helligkeitsgröße an eine Nutzer ID (beispielsweise Volkswagen ID) bzw. eine für einen Nutzer und/oder ein Fahrzeug charakteristische Größe gebunden werden.

Bei einem bevorzugten Verfahren können die Vorlieben eines Nutzers berücksichtigt werden, insbesondere werden nur oder zusätzlich Helligkeitsgrößen von einer nichtflüchtigen Speichereinrichtung abgerufen, welche dem Nutzer zugeordnet sind. Bevorzugt kann sich der Nutzer zu Beginn einer Fahrt mit der ihm zugeordneten Nutzer ID in demselben Fahrzeug, insbesondere in einem beliebigen anderen Fahrzeug einloggen, um so nur Zugriff auf die dem Nutzer zugeordneten Helligkeitsgrößen zu erhalten.

Bei einem bevorzugten Verfahren können die Vorlieben eines Nutzers in Bezug auf wenigstens eine spezielle Umfeldsituation berücksichtigt werden. Bevorzugt kann der Nutzer individuelle Nutzereingaben vornehmen, um die für eine spezielle Umfeldsituation charakteristische abzurufende Helligkeitsgröße festzulegen. Bevorzugt ist es dem Nutzer möglich, aus einer Vielzahl geeigneter Helligkeitsgrößen auszuwählen, insbesondere in Abhängigkeit von den Vorlieben des Nutzers.

Die vorliegende Erfindung ist weiterhin gerichtet auf eine Steuervorrichtung für eine Beleuchtungseinrichtung eines Fahrzeugs zur, insbesondere automatischen, Adaption wenigstens einer Lichtfunktion der Beleuchtungseinrichtung des Fahrzeugs an eine Umfeldsituation des Fahrzeugs mit wenigstens einer Sensoreinrichtung und/oder einer Kommunikationseinrichtung zur Erfassung von Umfelddaten, welche für ein bzw. das Umfeld des Fahrzeugs charakteristisch sind, mit einer Auswertungseinrichtung zur Ermittlung einer Umfeldgröße auf Grundlage der (mittels der wenigstens einen Sensoreinrichtung erfassten) Umfelddaten, welche für eine eine Lichtadaption erfordernde Umfeldsituation des Fahrzeugs charakteristisch ist.

Dabei ist die Steuervorrichtung dazu geeignet und bestimmt sowie insbesondere dazu konfiguriert, basierend auf der ermittelten Umfeldgröße und/oder auf Grundlage der erfassten Umfelddaten ein Abrufen einer Helligkeitsgröße von einer, insbesondere externen, nichtflüchtigen Speichereinrichtung zu veranlassen und insbesondere die abgerufene wenigstens eine Helligkeitsgröße zu empfangen. Bevorzugt wird dabei zum (insbesondere drahtlosen) Abrufen der Helligkeitsgröße eine Abrufeinheit (insbesondere des Fahrzeugs) verwendet.

Bevorzugt weist die Steuervorrichtung die Abrufeinheit zum Abrufen einer Helligkeitsgröße basierend auf der ermittelten Umfeldgröße von einer, insbesondere externen, nichtflüchtigen Speichereinrichtung auf, wobei die Helligkeitsgröße für die Umfeldsituation charakteristisch ist

Weiterhin weist die Steuervorrichtung eine Steuereinrichtung zur Ermittlung einer Steuergröße auf Grundlage der Helligkeitsgröße zur Adaption der wenigstens einen Lichtfunktion der Beleuchtungseinrichtung des Fahrzeugs und zur Steuerung der Beleuchtungseinrichtung des Fahrzeugs auf.

Bevorzugt ist die wenigstens eine Sensoreinrichtung ausgewählt aus einer Gruppe von Sensoreinrichtungen umfassend wenigstens einen Lichtsensor, wenigstens einen Regensensor, wenigstens einen Abstandsensor, wenigstens einen Fahrzeugpositionssensor, insbesondere einen GPS-Sensor, wenigstens eine Bildaufnahmeeinrichtung, insbesondere eine Kamera, besonders bevorzugt eine Rückfahrkamera, besonders bevorzugt eine Frontkamera, eine Stereokamera, einen thermischen Sensor, einen Ultraschallsensor, einen Lidar-Sensor, einen Radar-Sensor und dergleichen sowie Kombinationen hiervon. Bevorzugt ist die Kommunikationseinrichtung zum Empfangen von drahtlos übermittelten Umfelddaten (insbesondere von einem weiteren Verkehrsteilnehmer und/oder einer Infrastruktureinrichtung) geeignet und bestimmt.

Bevorzugt ist die Auswertungseinrichtung dazu geeignet und bestimmt, auf Grundlage der erfassten Umfelddaten eine Umfeldgröße zu ermitteln, welche für eine eine Lichtadaption erfordernde Umfeldsituation charakteristisch ist.

Bevorzugt umfasst die Auswertungseinrichtung eine Prozessoreinrichtung und/oder Datenverarbeitungseinrichtung, welche dazu geeignet und bestimmt ist, ein (oben beschriebene) Verfahren zur Erkennung von Objekten und/oder zur Klassifizierung von Objekten auszuführen.

Bevorzugt ist die Abrufeinheit dazu geeignet und bestimmt, eine Helligkeitsgröße basierend auf der ermittelten Umfeldgröße von einer nichtflüchtigen Speichereinrichtung abzurufen.

Bevorzugt ist die Abrufeinheit dazu geeignet und bestimmt, Daten, insbesondere Helligkeitsgrößen, von einem lokalen Speichermedium, insbesondere von einem Datenspeicher des Fahrzeugs abzurufen.

Bevorzugt umfasst die Abrufeinheit ein Modul zur drahtlosen Übertragung von Daten und ist dazu geeignet und bestimmt, Daten, insbesondere Helligkeitsgrößen von einer externen Speichereinrichtung, insbesondere einer Cloud-basierten und/oder zentralen Speichereinrichtung abzurufen und/oder zu empfangen.

Bevorzugt ist die Steuereinrichtung dazu geeignet und bestimmt auf Grundlage wenigstens einer Helligkeitsgröße eine Steuergröße zur Adaption der wenigstens einen Lichtfunktion der Beleuchtungseinrichtung des Fahrzeugs zu ermitteln. Besonders bevorzugt ist die Steuereinrichtung dazu geeignet und bestimmt, bei der Ermittlung der Steuergröße auf Grundlage wenigstens einer Helligkeitsgröße wenigstens eine weitere Helligkeitsgröße zu berücksichtigen.

Bevorzug ist die Steuereinrichtung dazu geeignet und bestimmt, auf Grundlage der ermittelten Steuergröße die Beleuchtungseinrichtung des Fahrzeugs zu steuern und eine Adaption der wenigstens einen Lichtfunktion der Beleuchtungseinrichtung des Fahrzeugs vorzunehmen.

Bevorzugt umfasst die Beleuchtungseinrichtung des Fahrzeugs wenigstens ein Scheinwerfer und bevorzugt eine Vielzahl an Scheinwerfern, wobei die Scheinwerfer bevorzugt paarweise vorliegen. Bevorzugt sind die Scheinwerfer einzeln und unabhängig voneinander steuerbar. Bevorzugt umfasst die Beleuchtungseinrichtung des Fahrzeugs Bestandteile einer Innenraumbeleuchtung.

Bevorzugt ist die Steuervorrichtung dazu eingerichtet, geeignet und/oder bestimmt, das obig beschriebene Verfahren zur, insbesondere automatischen, Adaption wenigstens einer Lichtfunktion einer Beleuchtungseinrichtung eines Fahrzeugs an eine Umfeldsituation des Fahrzeugs und/oder das obig beschriebene Verfahren zur Bereitstellung wenigstens einer Helligkeitsgröße zur, insbesondere automatischen, Adaption wenigstens einer Lichtfunktion einer Beleuchtungseinrichtung eines Fahrzeugs an eine Umfeldsituation des Fahrzeugs sowie alle bereits obig im Zusammenhang mit den Verfahren beschriebenen Verfahrensschritte einzeln oder in Kombination miteinander auszuführen. Umgekehrt können die Verfahren mit allen im Rahmen der Steuervorrichtung beschriebenen Merkmalen einzeln oder in Kombination miteinander ausgestattet sein.

Die vorliegende Erfindung ist weiterhin gerichtet auf ein Fahrzeug, insbesondere Kraftfahrzeug, umfassend eine obig beschriebene Steuervorrichtung entsprechend einer Ausführungsform. Bevorzugt handelt es sich bei der Steuervorrichtung um einen (festen, insbesondere einen nicht zerstörungsfrei lösbaren) Bestandteil des Fahrzeugs.

Bei dem Fahrzeug kann es sich insbesondere um ein (motorisiertes) Straßenfahrzeug handeln. Darüber hinaus kann es sich bei dem Fahrzeug neben einem Straßenfahrzeug auch um ein Flugtaxi, ein Flugzeug und ein anderes Fortbewegungsmittel oder eine andere Fahrzeugart handeln, beispielsweise ein Luft-, Wasser- oder Schienenfahrzeug.

Die vorliegende Erfindung ist weiterhin gerichtet auf einen externen Server, insbesondere ein (bevorzugt obig beschriebenes) Backend. Bevorzugt ist der externe Server dazu geeignet und bestimmt, die im Rahmen des obig beschriebenen Verfahrens zur Bereitstellung wenigstens einer Helligkeitsgröße zur, insbesondere automatischen Adaption, wenigstens einer Lichtfunktion einer Beleuchtungseinrichtung eines Fahrzeugs an eine Umfeldsituation des Fahrzeugs beschriebenen Verfahrensschritte der Erzeugung der wenigstens einen Helligkeitsgröße und/oder dem Ablegen der wenigstens einen Helligkeitsgröße zur Bereitstellung an wenigstens ein Fahrzeug sowie bevorzugte Ausführungsformen auszuführen. Bevorzugt ist der externe Server dazu geeignet und bestimmt, die im Rahmen dieses Verfahrens zur Bereitstellung wenigstens einer Helligkeitsgröße beschriebenen erzeugten wenigstens einen Datensatz und bevorzugt eine Vielzahl von Datensätzen, welche dem externen Server bereitgestellt werden, zu empfangen und bevorzugt wie in dem obig beschriebenen Verfahren entsprechend einer Ausführungsform zu verarbeiten.

Die vorliegende Erfindung ist weiterhin gerichtet auf ein Computerprogramm oder Computerprogrammprodukt, umfassend Programmmittel, insbesondere einen Programmcode, welcher zumindest einzelne oder mehrere Verfahrensschritte der erfindungsgemäßen Verfahren einzeln oder in Kombination miteinander und bevorzugt eine der beschriebenen bevorzugten Ausführungsformen repräsentiert oder kodiert und zum Ausführen durch eine Prozessoreinrichtung ausgebildet ist.

Die vorliegende Erfindung ist weiterhin gerichtet auf eine nichtflüchtige Speichereinrichtung, insbesondere einen Datenspeicher, auf welchem zumindest eine Ausführungsform des erfindungsgemäßen Computerprogramms oder einer bevorzugten Ausführungsform des Computerprogramms gespeichert ist.

Weitere Vorteile und Ausführungsformen ergeben sich aus den beigefügten Zeichnungen:
Darin zeigen:
- Fig. 1: Anwendung des erfindungsgemäßen Verfahrens zur Adaption einer Lichtfunktion und zum Bereitstellen von Helligkeitsgrößen;
- Fig. 2: Anwendung des erfindungsgemäßen Verfahrens zur Adaption einer Lichtfunktion und zum Bereitstellen von Helligkeitsgrößen;
- Fig. 3: eine schematische Darstellung eines Fahrzeugs gemäß der vorliegenden Erfindung und
- Fig. 4: ein Wirkdiagramm der erfindungsgemäßen Verfahren.

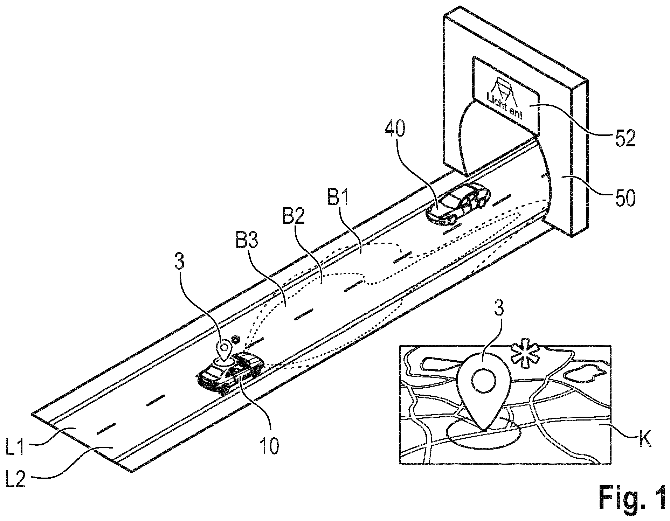

Anhand von Figur 1 können sowohl das erfindungsgemäße Verfahren zur Adaption einer Lichtfunktion der Beleuchtungseinrichtung eines Fahrzeugs als auch das erfindungsgemäße Verfahren zur Bereitstellung von Helligkeitsgrößen erläutert werden.

Figur 1 zeigt eine Fahrbahn mit zwei Fahrbahnen (L1 und L2) und ein Fahrzeug 10, umfassend eine erfindungsgemäße Steuerungsvorrichtung. In einiger Entfernung ist ein Tunnel 50 abgebildet, auf dessen Mauer sich ein Verkehrsschild mit einem Symbol 52 mit der Inschrift "Licht an!" angeordnet ist.

Bei einer ersten Durchfahrt kann beispielsweise zunächst das erfindungsgemäße Verfahren zur Bereitstellung einer Helligkeitsgröße angewendet werden. Der Nutzer des Fahrzeugs erkennt eine vor ihm liegende Einfahrt in einen Tunnel 50 zusammen mit einem Verkehrsschild mit einem Symbol 52 mit der Aufschrift "Licht an!". Dies veranlasst den Nutzer des Fahrzeugs zum Einschalten des Abblendlichtes. Das Fahrzeug 10, genauer gesagt die Steuervorrichtung des Fahrzeugs registriert das Einschalten des Abblendlichtes als Nutzerverhalten und erfasst zu diesem Zeitpunkt die aktuelle Position 3.

Zusätzlich (nicht dargestellt) erfasst das Fahrzeug mit einer Frontkamera ein ortsaufgelöstes Bild des Tunneleingangs und die Auswerteeinrichtung des Fahrzeugs erkennt in dem ortsaufgelösten Bild einen Tunnel 50 und/oder ein Verkehrsschild mit einem Symbol 52 "Licht an!". Das Fahrzeug erzeugt aus den ermittelten Umfelddaten (GPS-Koordinaten und/oder. ortsaufgelöstes Bild bzw. ein erkanntes Objekt/ eine erkannte Objektklasse) zusammen mit dem registrierten Nutzerverhalten (Anschalten des Abblendlichtes) einen Datensatz und ermittelt daraus eine Helligkeitsgröße, welche auf einer nichtflüchtigen Speichereinrichtung abgelegt wird.

Bei der selben Durchfahrt oder einer beliebigen anderen Durchfahrt (beispielsweise mit eingeschaltetem Fernlicht) erkennt der Nutzer ein entgegenkommenden Fahrzeug 40, was den Fahrer veranlasst die Lichtfunktion der Beleuchtungseinrichtung zu drosseln, beispielsweise durch das Abschalten des Fernlichts. Das Fahrzeug erkennt die manuelle Adaption der Lichtfunktion und registriert diese. Parallel dazu nimmt die Frontkamera (nicht dargestellt) ein ortsaufgelöstes Bild auf, in welchem die Auswertungseinrichtung ein entgegenkommendes Fahrzeug erkennt. Das Fahrzeug erzeugt einen Datensatz aus der registrierten Adaption (Abschalten des Fernlichtes) und dem Erkennen eines entgegenkommenden Fahrzeugs und erzeugt daraus eine weitere Helligkeitsgröße, welche auf der nichtflüchtigen Speichereinrichtung abgelegt wird.

Insgesamt wird durch regelmäßiges manuelles Einschalten z.B. des Abblendlichtes an bestimmten Routenpunkten (z.B. vor einem abgeschatteten Bereich, wie einem Tunnel) entsprechend der Umfeldsituation und Fahrsituation gelernt und kann automatisch auf unbekannte Situationen angewendet werden.

Beispielsweise bei einer wiederholten Fahrt nähert sich das oder ein anderes Fahrzeug 10 wieder dem Tunnel 50 und erfasst dabei die Position 3 des Fahrzeugs. Anhand der Position 3 (GPS-Koordinaten, beispielsweise hinterlegt auf der Karte K des Fahrzeugnavigationssystems) erkennt das Fahrzeug die Umfeldsituation (vor dem Tunnel 50) und schaltet basierend auf der (wie oben beschrieben) hinterlegten Helligkeitsgröße automatisch das Abblendlicht ein.

Alternativ (oder zusätzlich) zur Erfassung der Position 3 des Fahrzeugs 10, könnte auch die Frontkamera bzw. die Auswertungseinrichtung über die Aufnahme eines ortsaufgelösten Bildes den Tunnel 50 oder das daran angebrachte Verkehrszeichen mit dem Symbol 52 erkennen, wodurch ebenfalls das automatische Anschalten des Abblendlichtes ausgelöst wird (nicht dargestellt).

Wie in Figur 1 dargestellt erkennt das Fahrzeug 10 ebenfalls das entgegenkommende Fahrzeug 40, beispielsweise über die Aufnahme eines ortsaufgelösten Bildes mit der Frontkamera und einer Objekterkennung mittels der Auswertungseinrichtung. Das erkannte entgegenkommende Fahrzeug 40 veranlasst das Fahrzeug 10 zu einer Reduzierung der Lichtfunktion.

In diesem Fall beinhalten die abgerufenen Helligkeitsgrößen zum Teil gegensätzliche auszuführende Adaptionen der Lichtfunktion. Das Fahrzeug ermittelt auf Grundlage beider Helligkeitsgrößen eine optimale Adaption der Lichtfunktion der Beleuchtungseinrichtung. Das Resultat dieser Adaption, also der resultierende ausgeleuchtete Bereich (B1-B3) ist in Figur 1 dargestellt. Es ist deutlich zu erkennen, dass der Ausleuchtungsbereich auf der Fahrbahn L1 des Gegenverkehrs vor dem entgegenkommenden Fahrzeug endet, während auf der Fahrbahn L2 des Fahrzeugs ein weiter entfernter Bereich ausgeleuchtet wird.

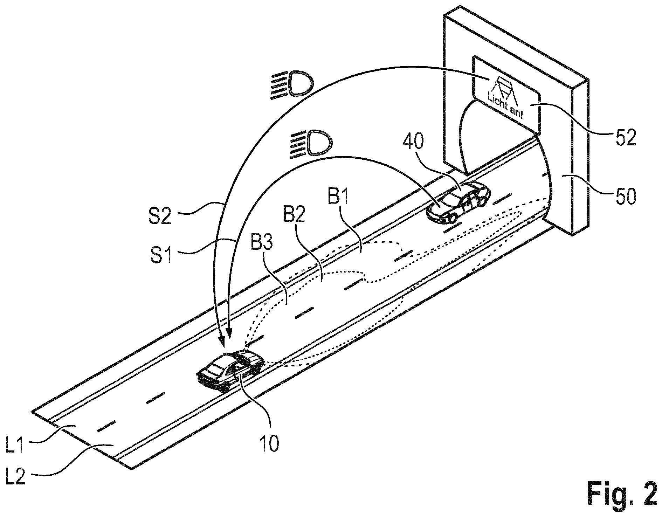

Figur 2 zeigt eine ähnliche Situation wie in Figur 1. In diesem Ausführungsbeispiel erfolgt die Erfassung von Umfelddaten nicht über die Sensoren des Fahrzeugs (Positionssensor, Kamera, etc.), sondern das Fahrzeug empfängt über eine Kommunikationseinrichtung des Fahrzeugs Signale, beispielsweise von einem entgegenkommenden Fahrzeug 40 (Empfangen des Signals S1) oder von einem sendefähigen Verkehrszeichen (Empfangen des Signals S2). Das gesendete Signal S2 beinhaltet Information über die Notwendigkeit des Einschaltens des Abblendlichtes in einem vorausliegenden abgeschatteten Bereich, während das Signal S1 Informationen über die Anwesenheit eines entgegenkommenden Fahrzeugs beinhaltet. Der Nutzer des Fahrzeugs 10 schaltet darauf hin das Abblendlicht ein. Zur Erzeugung eines Datensatzes und daraus resultierend einer Helligkeitsgröße wird das empfangene Signal (S2) zusammen mit dem Nutzerverhalten erfasst und gegebenenfalls werden zusätzlich die Umfelddaten weiterer Sensoren, wie die eines Lichtsensors, eines GPS-Sensors, eines Abstandsensors, die Aufnahme eines ortsaufgelösten Bildes zusammen mit einer Objekterkennung und dergleichen erfasst und mitabgelegt.

Nach dem Lernprozess (Erzeugung und Ablegen der Helligkeitsgröße) kann das Fahrzeug automatisch auf eine solche bzw. ähnliche Situation (unbekannte Situation) reagieren und beim Empfangen der Signale eines anderen Verkehrsteilnehmers (S1) und/oder eines sendefähigen Verkehrsschildes (S2) eine automatische Adaption der Lichtfunktion der Beleuchtungseinrichtung des Fahrzeugs vornehmen.

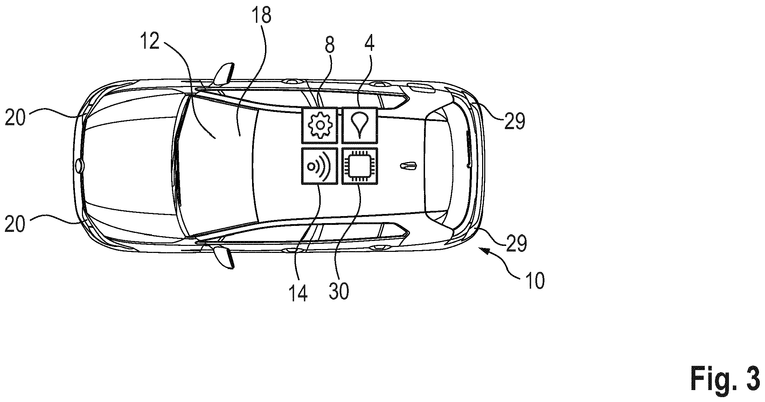

Figur 3 zeigt eine schematische Darstellung eines Fahrzeugs und die für die Anwendung der erfindungsgemäßen Verfahren relevanten Bauteile des Fahrzeugs. Dabei umfasst die Beleuchtungseinrichtung des Fahrzeug 10 auf der Vorderseite ein Scheinwerferpaar 20 und auf der Rückseite ein SBBR-Paar 29. Bei dem Scheinwerferpaar 20 handelt es sich typischerweise um ein Abblendlicht und zusätzlich zu diesem kann die Beleuchtungseinrichtung an der Vorderseite des Fahrzeugs 10 weitere Schweinwerfer, beispielsweise für ein Fernlicht, ein Standlicht, ein Tagfahrlicht, ein Kurvenlicht, Nebelscheinwerfer und dergleichen aufweisen (hier nicht dargestellt). Unter einem SBBR-Paar wird eine kombinierte Leuchte verstanden, welche in der Lage ist, die Funktionen eines Standlichtes, eines Bremslichtes, eines Blinklichtes und einer Rückfahrlichtes auszuführen. Zusätzlich zu dem SBBR-Paar kann eine Nebelschlussleuchte vorhanden sein (hier nicht dargestellt).

Im Bereich der Frontscheibe des Fahrzeugs 10, sind hier ein Regen-/Lichtsensor 18 und eine Frontkamera 12 zur Erfassung von Umfelddaten angeordnet. Das Fahrzeug 10 kann über zusätzliche Sensoreinrichtungen verfügen, beispielsweise über einen Abstandssensor (Radar-, Ultraschall-, Lidar-Sensor), welche hier nicht dargestellt sind.

Das Fahrzeug 10 umfasst weiterhin eine Kommunikationsschnittstelle 14 einer Kommunikationseinrichtung für das Empfangen und Senden von Daten, ein GPS-Modul 4 als Fahrzeugpositionssensor, eine Künstliche Intelligenz 30 und eine Steuereinrichtung 8 zur Ausführung der Adaption der Lichtfunktionen der Beleuchtungseinrichtung des Fahrzeugs. Die künstliche Intelligenz 30 repräsentiert hier insbesondere alle für das Ausführen der erfindungsgemäßen Verfahren nötigen Computerprogramme, Algorithmen, Programmcodes und die dazugehörigen Bestandteile der dafür notwendigen Hardware (Prozessoreinrichtung, Datenspeicher und dergleichen), insbesondere für die Erkennung von Objekten und/oder Objektklassen in den aufgenommenen ortsaufgelösten Bildern und insbesondere für die Auswertung der Umfelddaten, die Ermittlung der Umfeldgrößen, der Erzeugung von Datensätzen und Helligkeitsgrößen, das Abrufen von Helligkeitsgrößen, die Ermittlung von Steuergrößen und dergleichen. Hierbei ist es denkbar, dass die genannten Aufgaben durch mehr als eine Künstliche Intelligenz ausgeführt werden.

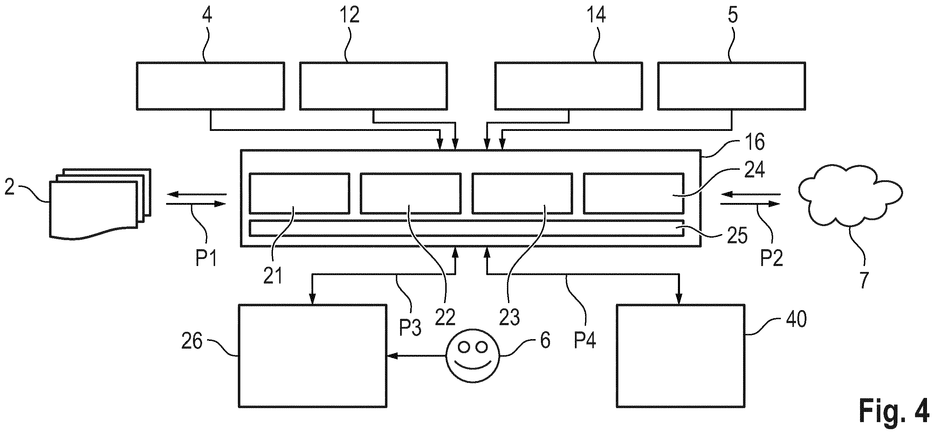

Figur 4 zeigt ein Wirkdiagramm der erfindungsgemäßen Verfahren. Im Mittelpunkt der Anwendung der erfindungsgemäßen Verfahren steht ein Steuergerät mit einer künstlichen Intelligenz (ECU^{KI}, electronic control unit) 16. Die ECU^{KI} 16 erfasst sowohl im Verfahren zur Adaption der Lichtfunktionen als auch im Verfahren zur Erzeugung von Helligkeitsgrößen auf Basis eines Nutzerverhaltens die Umfelddaten eines GPS-Moduls 4, eines Lichtsensors 5, einer Frontkamera 12 und empfängt und/oder sendet Daten und/oder Signale über eine Kommunikationsschnittstelle 14.

Das Einschalten der Scheinwerfer und Rückleuchten SBBR (Paar) 26 erfolgt im Rahmen des Lernprozesses (Verfahren zum Bereitstellen von Helligkeitsgrößen) durch den Nutzer 6 des Fahrzeugs und im Rahmen des Verfahrens zur Adaption der Lichtfunktion durch die ECU^{KI} 16. Der Pfeil P3 verdeutlicht diese beiden Varianten. Weiterhin kann die ECU^{KI} 16 mit anderen Fahrzeugen 40 kommunizieren, angedeutet mit dem Pfeil P4. Dies könnten Signale sein, wie sie weiter oben in Bezug auf die Figur 2 beschrieben wurden.

Die ECU^{KI} 16 ist in der Lage zur Erzeugung von Helligkeitsgrößen aus dem erfassten Nutzerverhalten 21, aus den erfassten Routenpunkten mit einer Interaktion 22 (Nutzerverhalten an erfasster Fahrzeugposition), aus den erfassten Umfelddaten 23 und aus der Anwesenheit bzw. Verhalten anderer Verkehrsteilnehmer 24 zu lernen. Die erfassten Daten (Umfelddaten, Signale anderer Verkehrsteilnehmer) werden zusammen mit dem erfassten Nutzerverhalten verarbeitet und als Datensatz 2 abgelegt (Pfeil P1). Aus dem abgelegten Datensatz 2 und/oder einer Vielzahl an abgelegten Datensätzen 2 erzeugt die ECU^{KI} 16 Helligkeitsgrößen, welche in einer nichtflüchtigen Speichereinrichtung 7, insbesondere einer Cloud abgelegt werden und dem Fahrzeug und insbesondere einer Vielzahl von Fahrzeugen bereitgestellt werden.

Die ECU^{KI} 16 kann anhand des Gelernten (21, 22, 23, 24, Erzeugung der Helligkeitsgröße) und der Erfassung von Umfelddaten die entsprechenden Helligkeitsgrößen von einer nichtflüchtigen Speichereinrichtung 7, insbesondere einer Cloud, abrufen, um das erfindungsgemäße Verfahren auf bekannte und unbekannte Situationen 25 anzuwenden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 2: Datensatz
- 3: Aufenthaltsort, Lokalisierung
- 4: GPS-Modul
- 5: Lichtsensor
- 6: Nutzer
- 7: nichtflüchtige Speichereinrichtung
- 8: Steuereinrichtung
- 10: Fahrzeug
- 12: Frontkamera
- 14: Kommunikationsschnittstelle
- 16: Künstliche Intelligenz (KI)
- 18: Licht-/Regensensor
- 20: Scheinwerfer Paar
- 21: KI Lernen von Nutzerverhalten
- 22: KI Lernen von Routenpunkten mit Interaktion
- 23: KI Lernen von Umfelddaten
- 24: KI Lernen von anderen Verkehrsteilnehmer
- 25: Anwenden auf bekannte und unbekannte Situationen
- 26: Einschalten Scheinwerfer und Rückleuchten SBBR (Paar)
- 29: SBBR Paar
- 30: ECU^{KI} (Electronic Control Unit, Künstliche Intelligenz)
- 40: Fahrzeug
- 50: Tunnel
- 52: Symbol
- B1, B2, B3: Ausleuchtungsbereich verschiedener Scheinwerfer
- K: Karte
- L1, L2: Fahrbahn
- P1, P2, P3, P4: Pfeil
- S1, S2: Signal

## Patentansprüche

1. Verfahren zur automatischen Adaption wenigstens einer Lichtfunktion einer Beleuchtungseinrichtung eines Fahrzeugs (10) an eine Umfeldsituation des Fahrzeugs (10) umfassend:
- Erfassen von Umfelddaten, wobei die Umfelddaten für das Umfeld des Fahrzeugs (10) charakteristisch sind,
- Ermitteln einer Umfeldgröße auf Grundlage der Umfelddaten, welche für eine eine Lichtadaption erfordernde Umfeldsituation des Fahrzeugs (10) charakteristisch ist,
- Abrufen einer Helligkeitsgröße basierend auf der ermittelten Umfeldgröße von einer nichtflüchtigen Speichereinrichtung (7), wobei die Helligkeitsgröße für die Umfeldsituation charakteristisch ist,
- Ermittlung einer Steuergröße auf Grundlage der Helligkeitsgröße zur Adaption der wenigstens einen Lichtfunktion der Beleuchtungseinrichtung des Fahrzeugs (10).

2. Verfahren nach Anspruch 1, **dadurch gekennzeichnet, dass** die Umfelddaten durch wenigstens eine Sensoreinrichtung und/oder eine Kommunikationseinrichtung erfasst werden, wobei die wenigstens eine Sensoreinrichtung aus einer Gruppe von Sensoreinrichtungen umfassend wenigstens einen Lichtsensor, wenigstens einen Regensensor, wenigstens einen Abstandsensor, wenigstens einen Fahrzeugpositionssensor, insbesondere einen GPS-Sensor, wenigstens eine Bildaufnahmeeinrichtung, insbesondere eine Kamera, besonders bevorzugt eine Rückfahrkamera, besonders bevorzugt eine Frontkamera, eine Stereokamera, einen thermischen Sensor, einen Ultraschallsensor, einen Lidar-Sensor, einen Radar-Sensor und dergleichen sowie Kombinationen hiervon ausgewählt ist.

3. Verfahren nach Anspruch 1, **dadurch gekennzeichnet, dass** die Umfeldgröße charakteristisch ist für wenigstens einen Verkehrsteilnehmer, wenigstens ein Verkehrszeichen, wenigstens eine Infrastruktureinrichtung oder dergleichen oder Kombinationen hiervon.

4. Verfahren zur Bereitstellung wenigstens einer Helligkeitsgröße zur automatischen Adaption wenigstens einer Lichtfunktion einer Beleuchtungseinrichtung eines Fahrzeugs an eine Umfeldsituation des Fahrzeugs umfassend:
- Erfassen eines Nutzerverhaltens wenigstens eines Nutzers eines Fahrzeugs, wobei das Nutzerverhalten für eine manuelle Adaption wenigstens einer Lichtfunktion einer Beleuchtungseinrichtung des Fahrzeugs an eine Umfeldsituation des Fahrzeugs charakteristisch ist,
- Erfassen von Umfelddaten, wobei die Umfelddaten für die Umfeldsituation des Fahrzeugs charakteristisch sind,
- Erzeugung wenigstens eines Datensatzes, welcher das Nutzerverhalten in Bezug auf die Umfeldsituation sowie dem Nutzerverhalten zugeordnete erfasste Umfelddaten für diese Umfeldsituation umfasst,
- Erzeugung der wenigstens einen Helligkeitsgröße auf Grundlage des wenigstens einen Datensatzes,
- Ablegen der wenigstens einen Helligkeitsgröße auf einer nichtflüchtigen Speichereinrichtung (7) zur Bereitstellung an wenigstens ein Fahrzeug (10) und bevorzugt an eine Vielzahl von Fahrzeugen (10).

5. Verfahren nach Anspruch 4, **dadurch gekennzeichnet, dass** die wenigstens eine Helligkeitsgröße wenigstens einem anderen zu dem Fahrzeug verschiedenen Fahrzeug bereitgestellt wird.

6. Verfahren nach Anspruch 4, **dadurch gekennzeichnet, dass** zur Erzeugung der wenigstens einen Helligkeitsgröße eine Vielzahl an Datensätzen verwendet wird, wobei sich die Datensätze paarweise durch das verwendete Fahrzeug und/oder einen verschiedenen Nutzer und/oder einen verschiedenen Erfassungszeitpunkt der Umfelddaten und/oder des Nutzerverhaltens unterschieden.

7. Verfahren nach einen der vorhergehenden Ansprüche, **dadurch gekennzeichnet, dass** es sich bei der nichtflüchtigen Speichereinrichtung (7) um einen Datenspeicher des Fahrzeugs (10) oder um eine externe Speichereinrichtung, insbesondere eine Cloud-basierte und/oder eine zentrale Speichereinrichtung handelt.

8. Verfahren nach Anspruch 4, **dadurch gekennzeichnet, dass** die wenigstens eine Helligkeitsgröße für ein Nutzerverhalten des Nutzers des Fahrzeugs (10) charakteristisch ist und diesem zugeordnet ist.

9. Steuervorrichtung für eine Beleuchtungseinrichtung eines Fahrzeugs (10) zur automatischen Adaption wenigstens einer Lichtfunktion der Beleuchtungseinrichtung des Fahrzeugs (10) an eine Umfeldsituation des Fahrzeugs (10) mit wenigstens einer Sensoreinrichtung und/oder einer Kommunikationseinrichtung zur Erfassung von Umfelddaten, welche für das Umfeld des Fahrzeugs (10) charakteristisch sind, mit einer Auswertungseinrichtung zur Ermittlung einer Umfeldgröße auf Grundlage der Umfelddaten, welche für eine eine Lichtadaption erfordernde Umfeldsituation des Fahrzeugs (10) charakteristisch ist, wobei die Steuervorrichtung dazu geeignet und bestimmt ist, basierend auf der ermittelten Umfeldgröße ein Abrufen einer Helligkeitsgröße von einer nichtflüchtigen Speichereinrichtung (7) zu veranlassen, wobei die Helligkeitsgröße für die Umfeldsituation charakteristisch ist, und mit einer Steuereinrichtung (8) zur Ermittlung einer Steuergröße auf Grundlage der Helligkeitsgröße zur Adaption der wenigstens einen Lichtfunktion der Beleuchtungseinrichtung des Fahrzeugs (10) und zur Steuerung der Beleuchtungseinrichtung des Fahrzeugs (10).

10. Fahrzeug (10) mit einer Steuervorrichtung nach dem vorhergehenden Anspruch.
